# EUROPEAN PATENT APPLICATION

(11) **EP 3 683 569 A1**
(43) Date of publication of application: **22.07.2020**
(21) Application number: 18853789.8
(22) Date of filing: 31.07.2018
(51) Int. Cl.: G01N 21/39, G01N 21/3504, G01N 21/27

(54) **SUBSTANCE DETECTION DEVICE AND SUBSTANCE DETECTION METHOD**

(30) Priority: 11.09.2017 JP 2017174389
(71) Applicant: Panasonic Intellectual Property Management Co., Ltd., Osaka-shi, Osaka 540-6207 (JP)
(72) Inventor: HIRATA Keiji, Osaka 540-6207 (JP)
(74) Representative: Eisenführ Speiser
(86) International application number: PCT/JP2018/028745
(87) International publication number: WO 2019/049562

(57) **Abstract**

A substance detection device modulates a wavelength of first non-visible light and then emits the first non-visible light to the detection area in a horizontal direction and a vertical direction. The substance detection device receives second non-visible light obtained in a manner that the first non-visible light is reflected by a substance in the detection area, and changes an emission direction of the first non-visible light and a light reception direction of the second non-visible light in the detection area. The substance detection device generates a substance position image indicating a detection result of whether or not the substance is present in the detection area, based on wavelength characteristics of the second non-visible light, calculates a representative value indicating the detection result in one pixel for each of m×n pixels constituting one frame in the visible image and the substance position image, and displays a result obtained by superimposing the calculation result on a corresponding pixel in the visible image, in a monitor, where m is an integer of 2 or more and n is an integer of 2 or more.

## Description

### TECHNICAL FIELD

The present disclosure relates to a substance detection device and a substance detection method of detecting a substance in an area as a detection target.

### BACKGROUND ART

In a related art, as a background art related to a substance detection device that detects a substance (for example, gas) in an area as a detection target, a gas detection device that detects a gas at a predetermined point is known (for example, see Patent Literature 1). The gas detection device emits laser beam from a laser diode (LD) module. The emitted laser beam is transmitted through a gas and then is reflected by a reflection object. The reflection light is input to a photodiode (PD) through a condenser lens and then is converted into an electrical signal in the PD. The electrical signal is used for detecting the gas.

### CITATION LIST

### PATENT LITERATURE

Patent Literature 1: JP-A-2008-232920

### SUMMARY OF INVENTION

### TECHNICAL PROBLEM

However, in the gas detection device in Patent Literature 1, detection of gas using one point, as a target, in a measurement atmosphere is assumed, and detection of gas using an area (in other words, space), as a target, in the measurement atmosphere is not assumed. Therefore, there is a problem in that, even though the technology disclosed in Patent Literature 1 is used, there is a possibility that detection accuracy of a gas is relatively decreased when the gas is detected using an area, as a target, in the measurement atmosphere.

There may not be immediately recognized where a substance (for example, gas) is present in the measurement atmosphere. In such a case, if it is not possible to early recognize a location at which a substance such as a gas is generated, an unexpected accident may occur. Thus, it is considered that rapid detection of a substance such as gas is also an important demand.

The present disclosure has been made considering the above-described conventional circumstances, and provides a substance detection device and a substance detection method for achieving both suppression of degradation in detection accuracy of a substance in a detection area and early detection of the substance in the detection area.

### SOLUTION TO PROBLEM

According to the present disclosure, there is provided a substance detection device that holds a visible image of a detection area of a substance. The substance detection device includes a projection unit that is configured to modulate a wavelength of first non-visible light and emits the first non-visible light to the detection area in a horizontal direction and a vertical direction, a light receiving unit that is configured to receive second non-visible light obtained in a manner that the first non-visible light is transmitted through the substance and is reflected by a reflection object in a background in the detection area, an actuator that is configured to change an emission direction of the first non-visible light in the projection unit and a light reception direction of the second non-visible light in the light receiving unit, in the detection area, and a detection processor that is configured to generate a substance position image based on signal strength frequency characteristics of the second non-visible light, the substance position image indicating a detection result of whether or not the substance is present in the detection area. The detection processor is configured to calculate a representative value indicating the detection result in one pixel for each of m ×npixels constituting one frame in the visible image and the substance position image, where m is an integer of 2 or more and n is an integer of 2 or more, and display a result obtained by superimposing the calculation result on a corresponding pixel in the visible image, in a monitor.

According to the present disclosure, there is provided a substance detection method using a substance detection device that holds a visible image of a detection area of a substance. The substance detection method includes a step of modulating a wavelength of first non-visible light and emitting the first non-visible light to the detection area in a horizontal direction and a vertical direction, a step of receiving second non-visible light obtained in a manner that the first non-visible light is transmitted through the substance and is reflected by a reflection object in a background in the detection area, a step of generating a substance position image based on signal strength frequency characteristics of the second non-visible light, the substance position image indicating a detection result of whether or not the substance is present in the detection area, a step of changing an emission direction of the first non-visible light and a light reception direction of the second non-visible light in the detection area, and a step of calculating a representative value indicating the detection result in one pixel for each of m×n pixels constituting one frame in the visible image and the substance position image, and displaying a result obtained by superimposing the calculation result on a corresponding pixel in the visible image, in a monitor, where m is an integer of 2 or more and n is an integer of 2 or more.

### ADVANTAGEOUS EFFECTS OF INVENTION

According to the present disclosure, it is possible to achieve both suppression of degradation in detection accuracy of a substance in a detection area and early detection of the substance in the detection area.

### BRIEF DESCRIPTION OF DRAWINGS

Fig. 1 is a schematic diagram illustrating an outline of a gas detection camera according to an embodiment.
Fig. 2 is a schematic diagram illustrating an example of an internal configuration of the gas detection camera.
Fig. 3 is a block diagram specifically illustrating an example of a hardware configuration of the gas detection camera.
Fig. 4 is a block diagram specifically illustrating an example of a hardware configuration of a light reception processor.
Fig. 5 is a diagram illustrating an example of a relation between a wavelength of emission light and a light reception voltage.
Fig. 6 is a diagram illustrating an example of changing wavelength characteristics of a laser beam having a modulated wavelength, characteristics of a light reception level of reflection light without a methane gas, and the characteristics of the light reception level of the reflection light when the methane gas is provided, over time.
Fig. 7 is a schematic diagram illustrating a beam diameter of a laser beam, which corresponds to each of m×n pixels constituting one frame in a gas position image.
Fig. 8 is a diagram illustrating a gas detection level in one pixel in the m-th row and the n-th column.
Fig. 9 is a diagram illustrating correspondence between a horizontal scan image with the laser beam, wavelength characteristics of the laser beam having the modulated wavelength, signal strength characteristics of received reflection light, and the gas detection level.
Fig. 10 is a schematic diagram illustrating a detection target area and a non-detection area of a gas in each of the m×n pixels constituting the one frame in the gas position image.
Fig. 11 is a flowchart illustrating an example of a gas detection operation corresponding to a scanning pattern illustrated in Fig. 10.
Fig. 12 is a flowchart illustrating an example of details of gas position image generation processing of Step S6 in Fig. 11.
Fig. 13 is a pattern diagram illustrating a first example of the scanning pattern of a laser beam to which a predetermined amount of offset is applied in a vertical direction.
Fig. 14 is a flowchart illustrating an example of a gas detection operation corresponding to a scanning pattern illustrated in Fig. 13.
Fig. 15 is a pattern diagram illustrating a first example of the scanning pattern of a laser beam, in which horizontal high-speed scanning and vertical high-speed scanning are alternately repeated for each frame.
Fig. 16 is a pattern diagram illustrating a second example of the scanning pattern of a laser beam, in which horizontal high-speed scanning and vertical high-speed scanning are alternately repeated for each frame.
Fig. 17 is a flowchart illustrating an example of a gas detection operation corresponding to a scanning pattern illustrated in Fig. 15 or 16.
Fig. 18A is a diagram illustrating an example of determination of the horizontal high-speed scanning based on a user operation.
Fig. 18B is a diagram illustrating an example of determination of the vertical high-speed scanning based on the user operation.
Fig. 19 is a diagram illustrating a first example of a UI screen on which an overlay image obtained by superimposing the gas position image on a visible image is displayed.

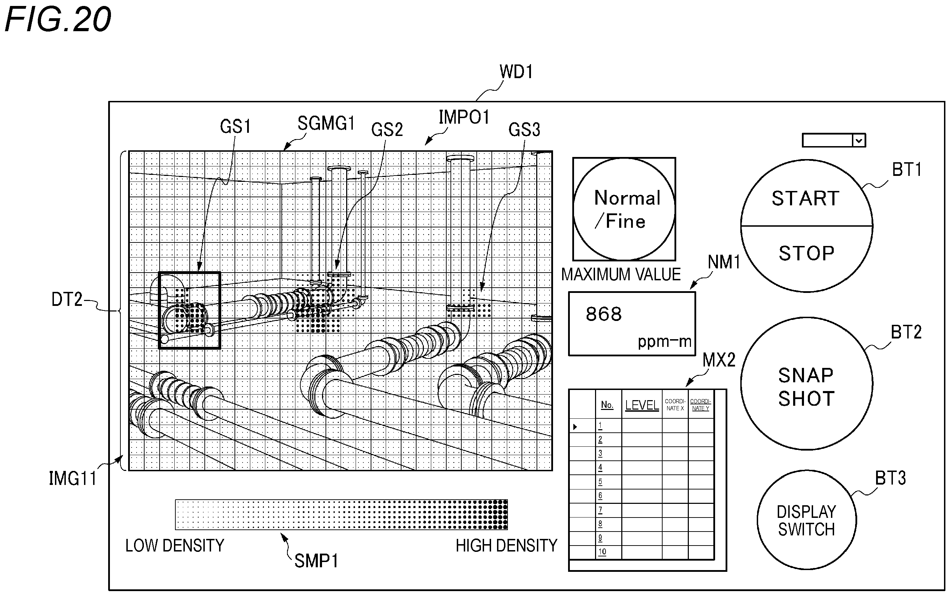

Fig. 20 is a diagram illustrating a second example of the UI screen on which the overlay image obtained by superimposing the gas position image on the visible image is displayed.

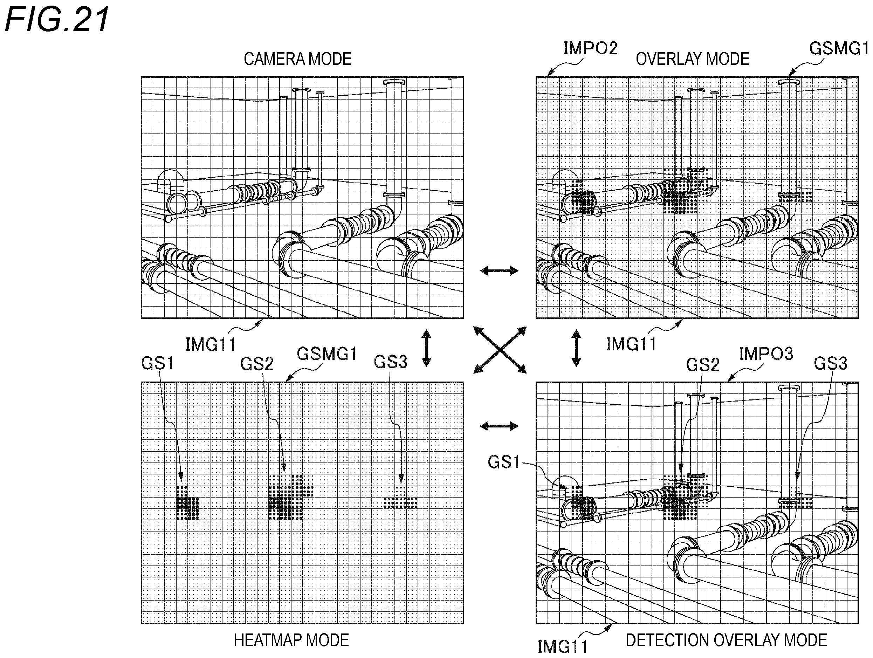

Fig. 21 is a diagram illustrating an example of switching a display mode of an image to be displayed on the UI screen.

### DESCRIPTION OF EMBODIMENTS

Hereinafter, an embodiment (referred to as "the present embodiment" below) in which a substance detection device and a substance detection method according to the present disclosure are specifically disclosed will be described in detail with reference to the drawings. A more detailed description than necessary may be omitted. For example, detailed description of the well-known item or repetitive description for the substantially same component may be omitted. This is because an occurrence of the following description becoming unnecessarily redundant is avoided, and understanding by those skilled in the art is facilitated. The accompanying drawings and the following description are provided to enable those skilled in the related art to sufficiently understand the present disclosure, and are not intended to limit the claimed subject matter.

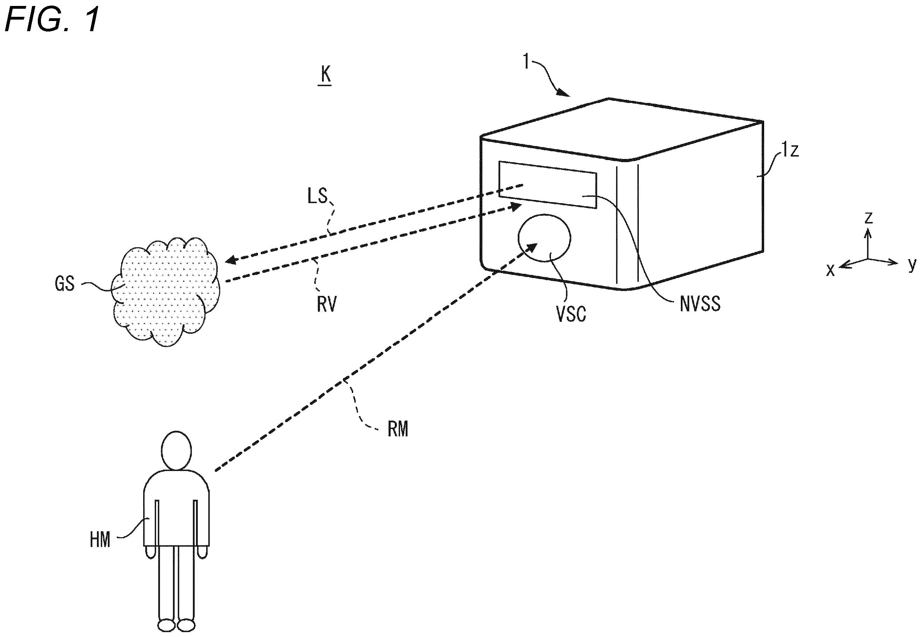

Fig. 1 is a schematic diagram illustrating an outline of a gas detection camera 1 according to the present embodiment. The gas detection camera (example of a substance detection device) 1 includes a visible light camera VSC and a non-visible light sensor NVSS disposed in a housing 1z. In the present embodiment, the gas detection camera 1 including at least the non-visible light sensor NVSS will be described as an example of the substance detection device according to the present disclosure.

An x-axis is defined to be a direction in which an imaging lens 31 in the visible light camera VSC and a condenser lens CLZ in the non-visible light sensor NVSS are disposed to be exposed to the housing 1z. A y-axis is defined to be a direction which is perpendicular to an x-axis direction and is parallel to the ground (not illustrated). A z-axis is defined to be a direction which is perpendicular to the x-axis and the y-axis and is parallel to a vertical direction (in other words, gravity direction).

The visible light camera VSC captures an image of a person HM or an object (not illustrated) in a predetermined detection space K with reflection light RM of visible light having a predetermined wavelength (for example, 0.4 to 0.7 µm), for example, similar to a known surveillance camera. An image captured by the visible light camera VSC is referred to as "a visible image".

The non-visible light sensor NVSS projects a laser beam LS to the same detection space K as a space for the visible light camera VSC. The laser beam LS is non-visible light (for example, infrared light, and an example of first non-visible light) having a modulated wavelength centering a predetermined wavelength. The laser beam LS is light including a wavelength in an absorption wavelength band of a substance (for example, gas GS) as a detection target.

The non-visible light sensor NVSS receives laser reflection light RV (example of second non-visible light, that is, laser reflection light in which a portion of a component of a specific wavelength is absorbed by a detection target substance) obtained in a manner that the laser beam LS is transmitted through the detection target substance (for example, gas GS such as a methane gas) and then is reflected by a reflection object on the background. Then, the non-visible light sensor NVSS determines whether or not the gas GS is detected in the detection space K, based on signal strength frequency characteristics of the laser reflection light RV.

In the present embodiment, the substance set as the detection target by the non-visible light sensor NVSS is a substance of which visual recognition in a visible image captured by the visible light camera VSC has difficulty. Such the substance may be a liquid or a solid in addition to the gas GS. Here, a case where the substance as the detection target is the gas GS will be described.

The gas detection camera 1 generates and transmits an image (referred to as "a gas position image" below) or an overlay image to be displayed in a monitor 150. The gas position image visually shows a detection result obtained in a manner that the non-visible light sensor NVSS determines whether or not the gas GS is present, on a visible image captured by the visible light camera VSC. The overlay image is obtained by superimposing information (for example, the name of the detected gas GS) relating to the gas position image on the visible image.

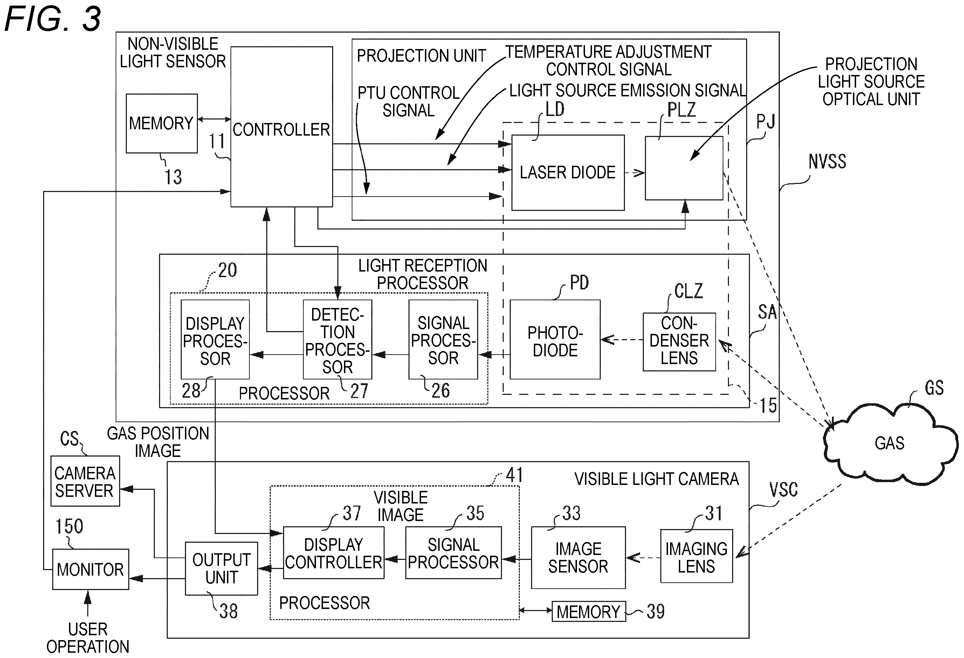

An output destination of the overlay image from the gas detection camera 1 is an external connection device connected to the gas detection camera 1 via a network (not illustrated). For example, the output destination is a camera server CS or the monitor 150 in Fig. 3. A substance detection system is configured to include the gas detection camera 1 and the monitor 150. The network may be a wired network (for example, intranet and Internet) or be a wireless network (for example, local area network (LAN)).

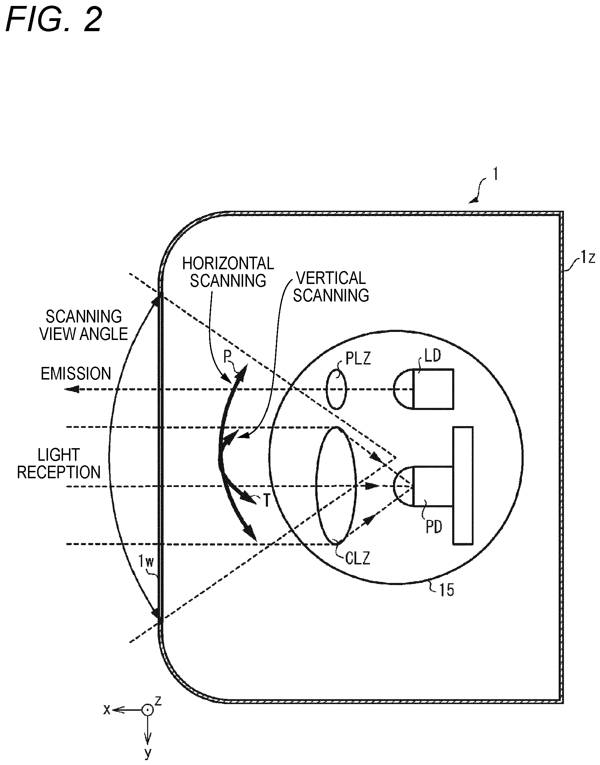

Fig. 2 is a schematic diagram illustrating an example of an internal configuration of the gas detection camera 1. Fig. 2 illustrates the internal configuration of the gas detection camera 1 when viewed from the top of Fig. 1 (that is, downward in the z-axis direction).

The gas detection camera 1 includes, for example, a box-like housing 1z. An opening portion 1w for the non-visible light sensor NVSS is formed in the front of the housing 1z (positive direction of the x-axis). A scanning view angle in two-dimensional scanning with the laser beam LS emitted (projected) from a laser diode LD is determined by the size of the opening portion 1w. Transparent glass or resin may be fitted into the opening portion 1w for waterproofing and dustproofing. The imaging lens 31 (see Fig. 3) of the visible light camera VSC is exposed to the front of the housing 1z (positive direction of the x-axis).

A pan tilt unit 15 (example of an actuator) is provided in the housing 1z. The pan tilt unit 5 is placed on a platform (not illustrated) and is revolvable in a panning direction (direction along an xy plane in Fig. 2) indicated by an arrow P in Fig. 2 and a tilting direction (z-axis direction in Fig. 2) indicated by an arrow T in Fig. 2. The pan tilt unit 15 includes a motor mechanism (not illustrated) that drives the platform.

The laser diode LD, a projection light source optical unit (for example, collimating lens) PLZ, a photodiode PD, and a condenser lens CLZ are mounted in the platform. The pan tilt unit 15 revolves the platform in the panning direction and the tilting direction, and thus allows two-dimensional scanning (horizontal scanning and vertical scanning) of the detection space K with the laser beam LS emitted from the laser diode LD.

The laser beam LS emitted from the laser diode LD is transmitted through the projection light source optical unit PLZ to become parallel light, and then is emitted toward the detection space K. The laser reflection light RV in which a portion of a component having a specific wavelength is absorbed by the gas GS in the detection space K is incident through the opening portion 1w formed in the housing 1z of the gas detection camera 1. Then, the laser reflection light RV is condensed by the condenser lens CLZ and is received by the photodiode PD.

It is determined whether or not the gas GS is present in the detection space K, from signal strength frequency characteristics (specifically, characteristics indicating whether or not a frequency 2f being twice a modulation frequency f is provided in a waveform showing signal strength of the laser reflection light RV) of the laser reflection light RV received by the photodiode PD. The detection space K is set, for example, by the shape of the opening portion 1w formed in the housing 1z. The detection space K corresponds to a range (scanning view angle) in which scanning of the detection space K with the laser beam LS is possible.

Here, the laser diode LD is easily influenced by a temperature. The wavelength of the laser beam LS emitted from the laser diode LD is slightly shifted by a temperature change. Therefore, the non-visible light sensor NVSS may perform temperature adjustment control (control for temperature adjustment) during a detection operation of the gas GS, so as to maintain the temperature of the laser beam LS emitted by the laser diode LD to be uniform such that the wavelength of the laser beam LS (specifically, center wavelength in wavelength modulation) is not changed.

In order to perform temperature adjustment control of the laser beam LS emitted by the laser diode LD, a diffusion plate (not illustrated) is disposed in the vicinity of the opening portion 1w in the housing 1z. A reference cell (not illustrated) is disposed between the diffusion plate and the laser diode LD. A gas having the same components as those in the gas GS (for example, methane gas) is sealed in the reference cell.

In the temperature adjustment control, if the laser beam LS emitted from the laser diode LD is transmitted through the reference cell and then is diffused by the diffusion plate, a portion of the diffused light is transmitted through the condenser lens CLZ, and then is received by the photodiode PD for substance detection. Since the laser beam LS is diffused by the diffusion plate, the light quantity of the laser reflection light RV received by the photodiode PD is reduced and falls within an allowable light reception amount of the photodiode PD. When performing the temperature adjustment control is to be omitted, the disposition of the diffusion plate or the reference cell may be omitted.

Fig. 3 is a block diagram specifically illustrating an example of a hardware configuration of the gas detection camera 1. The gas detection camera 1 includes the non-visible light sensor NVSS and the visible light camera VSC. The non-visible light sensor NVSS includes a controller 11, a projection unit PJ, and a light reception processor SA.

The controller 11 is configured, for example, using a central processor (CPU), a micro-processor (MPU), or a digital signal processor (DSP). The controller 11 performs, for example, signal processing for collectively handling operation control of each component in the non-visible light sensor NVSS, input and output processing of data to and from another component, arithmetic operation processing of data, and storing processing of data. The controller 11 sets a detection threshold value M for detecting the gas GS as a detection target of the non-visible light sensor NVSS, in a detection processor 27.

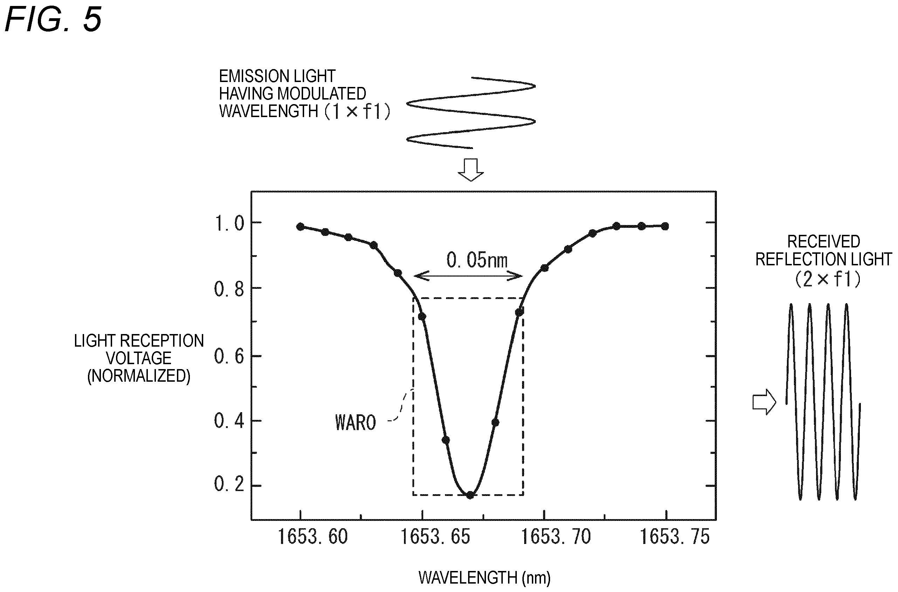

The controller 11 transmits a timing signal for AD conversion to the detection processor 27. The controller 11 transmits a light source emission signal to the laser diode LD. The light source emission signal is used for modulating the wavelength of the laser beam LS emitted from the laser diode LD (for example, sweeping within ± a predetermined width (for example, ±0.0.5 nm) from a center frequency, see Fig. 5).

The controller 11 receives an input of a temperature adjustment state signal from the detection processor 27, generates a temperature adjustment control signal based on the temperature adjustment state signal, and transmits the temperature adjustment control signal to the laser diode LD. The temperature adjustment control signal is a signal for adjusting the temperature of the laser beam LS emitted from the laser diode LD and is a signal for instructing a Peltier element (not illustrated) in the laser diode LD to absorb or generate heat. The laser diode LD changes the center wavelength of the laser beam LS by a temperature change, in accordance with the temperature adjustment control signal from the controller 11.

The controller 11 generates a pan tilt unit (PTU) control signal with reference to setting information (for example, information regarding a timing at which the emission direction of the laser beam LS or the light reception direction of the laser reflection light RV is switched) held in the memory 13 (for example, semiconductor memory). The PTU control signal is used for controlling driving of the pan tilt unit 15. The controller 11 transmits the generated PTU control signal to the pan tilt unit 15.

The projection unit PJ constitutes a portion of the pan tilt unit 15 and includes the laser diode LD and the projection light source optical unit PLZ.

The laser diode LD emits the laser beam LS having a wavelength adjusted so as to cause the wavelength of the laser beam LS to coincide with the peak in an absorption wavelength band of the gas GS as the detection target substance. Here, a methane gas (CH4) will be described as an example of the gas GS being the detection target substance.

Various methods are used for wavelength adjustment. For example, the controller 11 modulates the wavelength of the laser beam LS emitted from the laser diode LD by modulating a driving current of the laser diode LD as a semiconductor diode. The driving current is an input signal of the semiconductor diode, and the frequency of the driving current, which corresponds to an AC component is set as the modulation frequency. The Peltier element (not illustrated) in the laser diode LD absorbs or generates heat in accordance with the temperature adjustment control signal from the controller 11, so as to change the temperature of the laser diode LD. Thereby, the center wavelength of the laser beam LS is adjusted.

The projection light source optical unit PLZ is configured, for example, using a collimating lens and makes the laser beam LS emitted from the laser diode LD be parallel light.

The pan tilt unit 15 revolves the platform in which the laser diode LD, the projection light source optical unit (for example, collimating lens) PLZ, the condenser lens CLZ, and the photodiode PD are mounted, in the panning direction and the tilting direction. The pan tilt unit 15 performs two-dimensional scanning in a scanning range of the detection space K with the laser beam LS emitted from the laser diode LD.

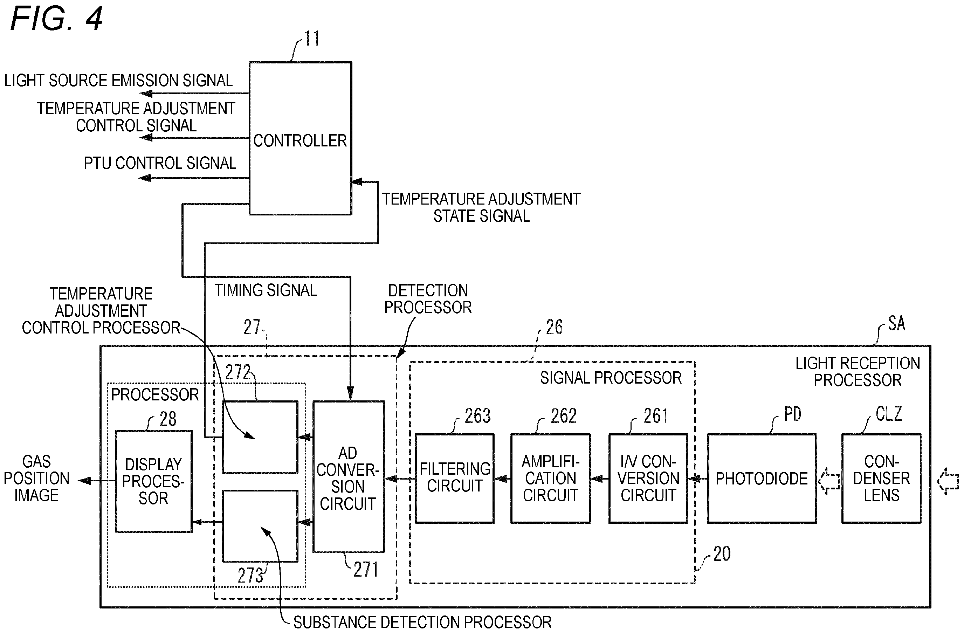

Fig. 4 is a block diagram specifically illustrating an example of a hardware configuration of the light reception processor. The light reception processor SA includes the condenser lens CLZ, the photodiode PD, a signal processor 26, a detection processor 27, and a display processor 28. The signal processor 26 includes an I/V conversion circuit 261, an amplification circuit 262, and a filtering circuit 263. The detection processor 27 includes an AD conversion circuit 271, a temperature adjustment control processor 272, and a substance detection processor 273. In the gas detection camera 1, while the laser beam LS having the modulated wavelength is projected (applied) to the detection space K from the projection unit PJ in a main scanning direction (described later), light (that is, laser reflection light RV) obtained in a manner that the laser beam LS is transmitted through the gas GS and then is reflected by a reflection object on the background is received by the light reception processor SA at any time. In the following description, the reflection object is, for example, a pipe or a valve disposed in the detection space K, or a wall surface, a floor, or a ceiling of the detection space K.

The temperature adjustment control processor 272 and the substance detection processor 273 in the detection processor 27, and the display processor 28 are realized by a processor 20 executing a program held in the memory 13. Similarly, the signal processor 26 or the AD conversion circuit 271 in the detection processor 27 may be realized by the processor 20 executing the program held in the memory 13.

The condenser lens CLZ receives the laser reflection light RV which is emitted from the laser diode LD and has a component having a specific wavelength, of which a portion is absorbed by the gas GS in the detection space K. The condenser lens CLZ condenses the laser reflection light RV on the photodiode PD.

The photodiode PD generates charges depending on the light quantity of the laser reflection light RV received by the condenser lens CLZ and outputs the charges in a form of a current signal.

The I/V conversion circuit 261 converts the current signal output from the photodiode PD into a voltage signal.

The amplification circuit 262 amplifies the voltage signal output from the I/V conversion circuit 261.

The filtering circuit 263 performs filtering on the voltage signal amplified by the amplification circuit 262. Then, the filtering circuit 263 outputs the voltage signal after filtering, to the AD conversion circuit 271 as a signal used for gas detection.

When the gas GS is detected, or the temperature of the laser diode LD is adjusted, the AD conversion circuit 271 converts a signal input from the signal processor 26 into a digital signal.

The temperature adjustment control processor 272 generates a signal (temperature adjustment state signal) indicating a temperature adjustment state, based on a value converted into a digital value by the AD conversion circuit 271 in a temperature adjustment operation. The temperature adjustment control processor 272 outputs the generated signal to the controller 11. The temperature adjustment state signal shows the magnitude (signal level) of a signal having a twice frequency (2f) a frequency (f) of a signal of the laser beam LS which is emitted from the laser diode LD and has a modulated wavelength.

In a case where the temperature of the laser diode LD is not changed, and the modulated wavelength band of the laser beam LS emitted from the laser diode LD is not shifted from the absorption wavelength band of the gas GS, the magnitude (signal level) of the signal having the twice frequency (2f) the frequency (f) in the temperature adjustment state signal increases.

In a case where the temperature of the laser diode LD is changed, and the modulated wavelength band of the laser beam LS emitted from the laser diode LD is shifted from the absorption wavelength band of the gas GS, the frequency of the temperature adjustment state signal fluctuates. The magnitude (signal level) of the signal which is obtained based on the signal from the photodiode PD and has the twice frequency (2f) the frequency f is reduced.

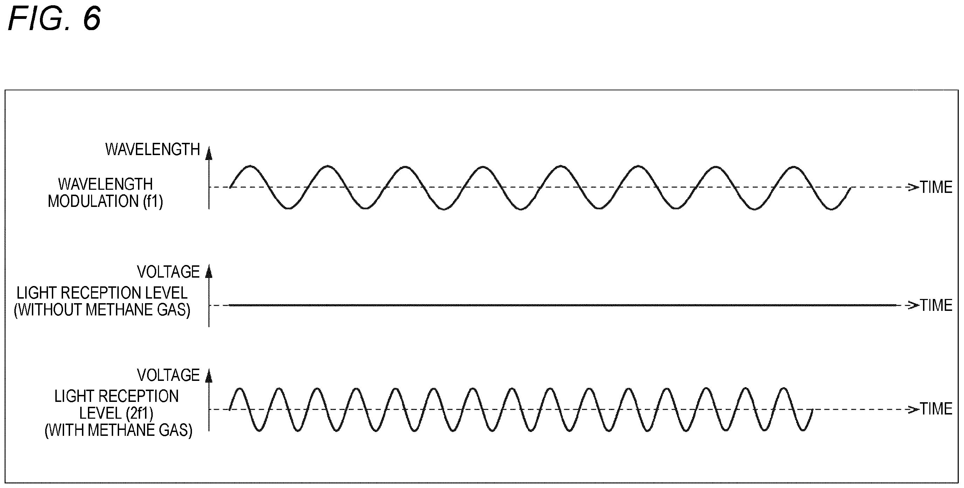

The substance detection processor (example of a detection processor) 273 detects whether or not the gas GS is present, based on the value converted into the digital value by the AD conversion circuit 271 in the detection operation of the gas GS (see Figs. 5 and 6). The substance detection processor 273 outputs a signal indicating a detection result of whether or not the gas GS is present, to the display processor 28. The substance detection processor 273 detects whether or not the gas GS is present, for each of pixels constituting a gas position image (described later). The substance detection processor 273 outputs a signal indicating a detection result of whether or not the gas GS is present, to the display processor 28. Thus, the display processor 28 may generate a gas position image showing a detection result of whether or not the gas GS is present, for each pixel. Accordingly, the non-visible light sensor NVSS can output the gas position image (described later) to the monitor 150 through the visible light camera VSC earlier than a case where the gas position image is generated by collecting the detection result of whether or not the gas GS is present in each pixel, for each of lines constituting the gas position image (described later) in the horizontal direction or the vertical direction or for each frame of the gas position image (described later). That is, the user who monitors the detection space K can rapidly recognize whether or not there is a generation location of the gas GS in the detection space K.

The substance detection processor 273 may collect the signal indicating the detection result of whether or not the gas GS is present in each pixel, for each of lines constituting the gas position image (described later) in the horizontal direction or the vertical direction. The substance detection processor 273 may output a result of the collection to the display processor 28. The substance detection processor 273 may collect the signal indicating the detection result of whether or not the gas GS is present in each pixel, for one frame in the entirety of the gas position image (described later). The substance detection processor 273 may output a result of the collection to the display processor 28.

Here, similar to the temperature adjustment state signal, the substance detection processor 273 obtains the signal showing the magnitude (signal level) of a signal having a frequency (2f) being twice the signal (frequency 1f) of the laser beam LS which is emitted from the laser diode LD and has the modulated wavelength, based on the value converted into the digital value by the AD conversion circuit 271. The substance detection processor 273 generates the signal indicating the detection result of whether or not the gas GS is present, based on whether or not the signal showing the magnitude (signal level) of the signal having the twice frequency (2f) is obtained.

The display processor (example of a detection processor) 28 generates a gas position image from the non-visible light sensor NVSS. The gas position image visually shows the detection result (for example, two-dimensional position) of whether or not the gas GS is present in the detection space K. The display processor 28 generates a gas position image of each pixel with a signal output from the substance detection processor 273 (that is, signal indicating the detection result of whether or not the gas GS is present, for each of pixels constituting the gas position image). The display processor 28 outputs the generated gas position image to a display controller 37 in the visible light camera VSC. As described above, in a case where a signal for one line (that is, one line in the horizontal direction or the main scanning direction in which irradiation with the laser beam LS is performed) is output from the substance detection processor 273, the display processor 28 may generate a gas position image corresponding to the signal for one line and output the gas position image to the display controller 37 of the visible light camera VSC. In a case where a signal for one frame (that is, one frame in a gas position image) is output from the substance detection processor 273, the display processor 28 may generate the gas position image corresponding to the signal for the one frame and output the gas position image to the display controller 37 of the visible light camera VSC. The gas position image includes image data indicating the detection result of whether or not the gas GS is present within a scanning view angle of the pan tilt unit 15 and data of two-dimensional position information (for example, pan angle and tilt angle of the platform) in the detection space K. The display processor 28 outputs the gas position image to the display controller 37 of the visible light camera VSC.

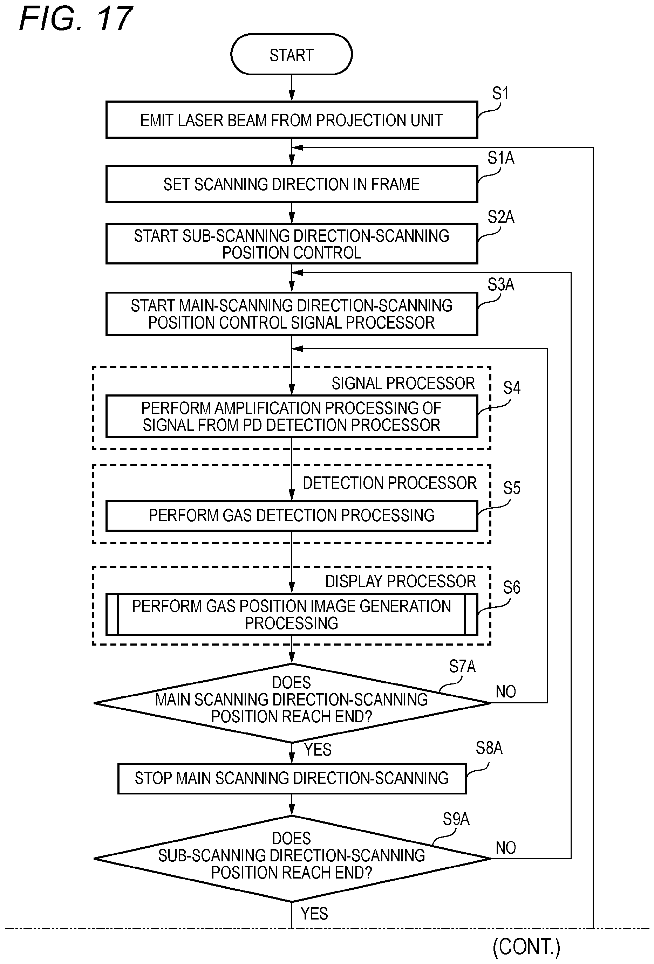

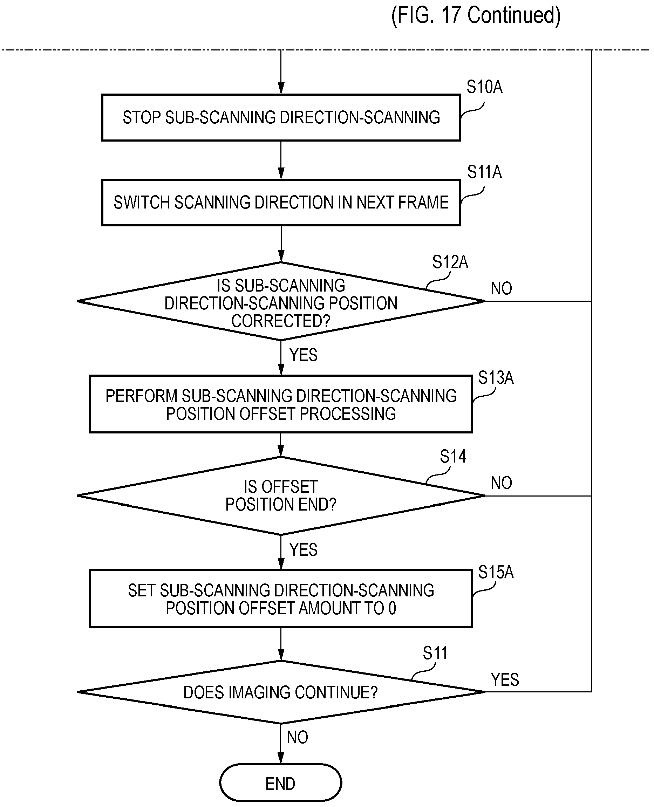

As described above, according to the gas detection camera 1 in the present embodiment, information regarding the gas GS, which is obtained by the detection processor 27 is superimposed (composed with) on a visible image in a detection space K, and the result of the superimposition is displayed and output. Thus, the non-visible light sensor NVSS can cause the user to clearly and visually show the location in which the gas GS is present in the detection space K including a view angle of the gas detection camera 1 (in other words, scanning view angle of the pan tilt unit 15). Here, the user is, for example, a manager of a gas company who dispatches a gas company investigator to a place in which the gas detection camera 1 is installed (for example, a piping room of a building, see Fig. 17). The user is a person who monitors the generation position of the gas GS by displaying display data (see below) generated by the gas detection camera 1 in a monitoring monitor (for example, the monitor 150 described later).

In the present embodiment, the display processor 28 may transmit the gas position image to, for example, the monitor 150 described later, the camera server CS, or a communication terminal (not illustrated, for example, a smart phone or a tablet terminal, which is held by the user), instead of transmission of the gas position image to the display controller 37 in the visible light camera VSC.

Returning to Fig. 3, the visible light camera VSC includes the imaging lens 31, an image sensor 33, a signal processor 35, the display controller 37, and an output unit 38. The signal processor 35 and the display controller 37 are realized by a processor 41 executing a program held in a memory 39.

The imaging lens 31 has an imaging view angle that generally includes the scanning view angle of the pan tilt unit 15 in the non-visible light sensor NVSS. The imaging lens 31 condenses incident light (that is, reflection light RM) from the outside and forms an image on an imaging surface of the image sensor 33.

The image sensor 33 has peak spectral sensitivity in a wavelength (for example, 0.4 µm to 0.7 µm) of visible light. The image sensor 33 converts an optical image imaged on the imaging surface into an electrical signal. An output of the image sensor 33 is input to the signal processor 35 as the electrical signal.

The signal processor 35 generates a visible image defined, for example, by red, green, and blue (RGB), YUV (luminance/color difference), or the like with the electrical signal being the output of the image sensor 33. Thus, a visible image captured by the visible light camera VSC is formed. The signal processor 35 outputs the visible image to the display controller 37.

For example, in a case where the gas GS is detected at a predetermined position in the visible image, the display controller 37 performs synthesis by superimposing the gas position image output from the display processor 28 on the visible image output from the signal processor 35, and thereby generates display data (for example, overlay image). The display controller 37 may read and acquire the visible image from the memory 39. According to the overlay image, the user can specifically specify the location in which the gas GS is generated in the visible image captured by the visible light camera VSC, by combining the location with an object (for example, pipe) reflected on the visible image, and thus it is possible to early find the generation location of the gas GS.

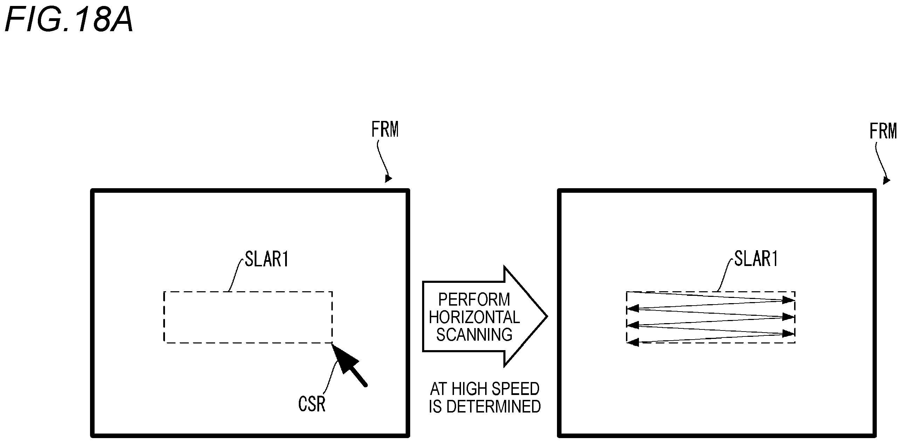

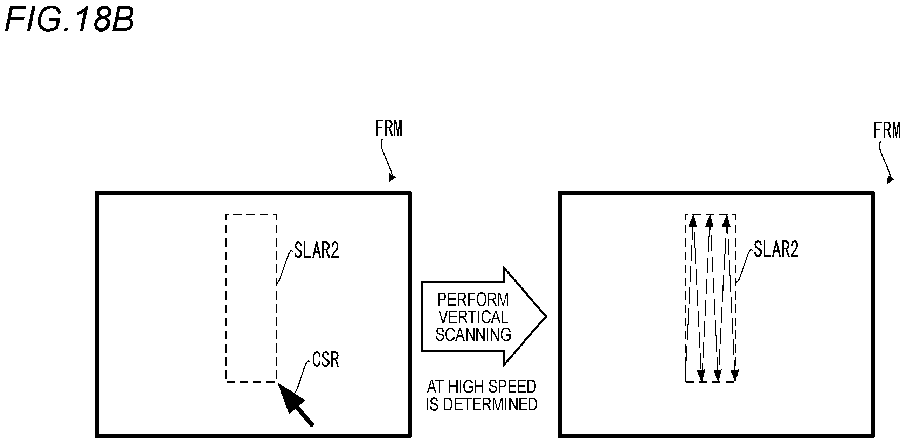

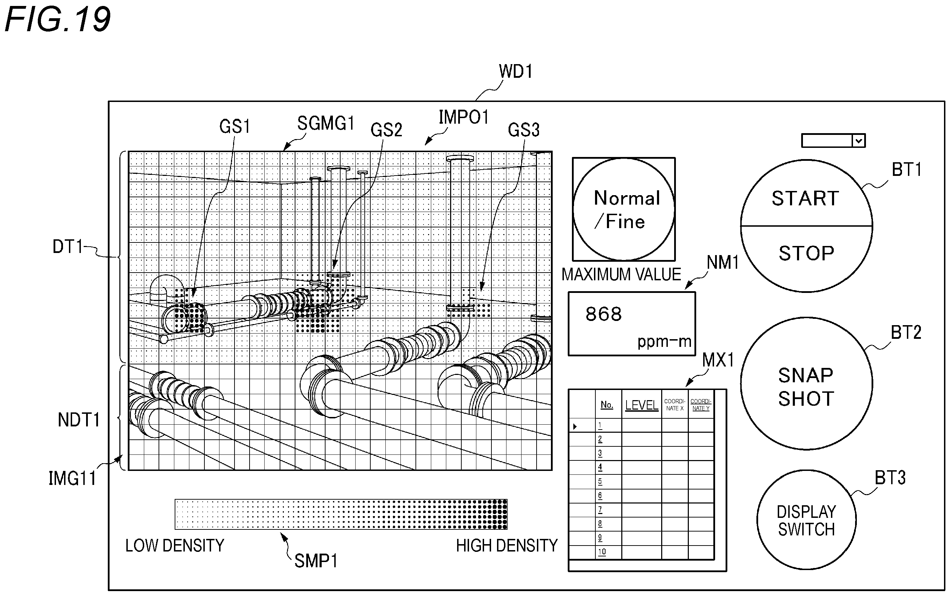

The output unit 38 generates a UI screen WD1 (see Figs. 17 and 18) including the display data (for example, overlay image) generated by the display controller 37. The output unit 38 outputs the UI screen WD1 to an external device (for example, camera server CS and monitor 150). Although described later with reference to Figs. 17 to 19, the display data generated by the display controller 37 is not limited to the overlay image, and may be a heatmap image (that is, gas position image itself transmitted from the display processor 28 (see a heatmap mode)) (not illustrated) of the visible image or may be the visible image itself (see a camera mode). Further, the overlay image is not limited to an image (for example, see an overlay mode on the upper right on the paper surface of Fig. 19) obtained by superimposing a gas position image indicating the detection result of whether or not the gas GS is present, which corresponds to all pixels constituting the visible image. For example, the overlay image may be an image (for example, see a detection overlay mode on the lower right on the paper surface of Fig. 19) obtained by superimposing a local gas position image corresponding to only pixels in which the gas GS is detected among all the pixels constituting the visible image.

The camera server CS transmits the display data (for example, overlay image) output from the display controller 37 to the communication terminal (not illustrated) or one or more external connection devices (not illustrated), and urges a display of the display data on display screens of the communication terminal or the one or more external connection devices.

The monitor 150 is configured, for example, using a liquid crystal display (LCD) or an organic electroluminescence (EL) and displays the display data output from the display controller 37. In the present embodiment, the monitor 150 may be configured using a touch panel capable of receiving an input operation (touch operation) of the user. If an input operation (may be simply referred to as a user operation) of the user on the monitor 150 is performed, an operation signal based on the input operation is input to the controller 11 in the gas detection camera 1 through the network (not illustrated), for example. The controller 11 may determine the main scanning direction and a sub-scanning direction (see the following descriptions) of the laser beam LS in accordance with the operation signal, for example.

Fig. 5 is a diagram illustrating an example of a relation between the wavelength of the emission light and the light reception voltage. In Fig. 5, the methane gas (CH4) will be described as an example of the gas GS being the detection target substance. In Fig. 5, a vertical axis indicates the light reception voltage (unit is a normalized value) of the photodiode PD, and a horizontal axis indicates a wavelength (nm: nanometer) of the laser reflection light RV received by the photodiode PD. As the light reception voltage becomes lower, absorptivity of the laser beam LS in the gas GS (for example, methane gas) increases. In other words, the gas GS is present at a position of high absorptivity. Absorption characteristics of the gas GS are determined for each gas GS.

In Fig. 5, an absorption spectrum of the gas GS has a wavelength band centering on 1653.67 nm, for example. Regarding this, the center wavelength of the laser beam LS emitted from the laser diode LD is set to 1653.67 nm and the laser beam LS is modulated with a modulation width of 0.05 nm, as shown in a wavelength modulation range WAR0.

As described above, the laser beam LS (that is, incident light having the modulated wavelength) is emitted from the laser diode LD. The laser reflection light RV (that is, received reflection light) in which a portion of a component having a specific wavelength is absorbed by the gas GS in the detection space K has a frequency (2f1) being twice a frequency (f1: modulation frequency) of the signal of the laser beam LS by the photodiode PD. In this case, a sinusoidal signal having a constant frequency is output.

Fig. 6 is a diagram illustrating an example of changing wavelength characteristics of the laser beam LS having a modulated wavelength, characteristics of a light reception level of reflection light without the methane gas, and the characteristics of the light reception level of the reflection light when the methane gas is provided, over time. In Fig. 6, wavelength modulation (f1) at the top stage indicates wavelength characteristic of the output of the laser diode LD (that is, the laser beam LS), a vertical axis indicates the wavelength, and a horizontal axis indicates time. In Fig. 6, the light reception levels at the middle stage and the bottom stage indicate signals (specifically, voltages) output from the photodiode PD in a case where the methane gas is not present and a case where the methane gas is present, respectively.

The signal received by the photodiode PD has a frequency (2f1) being twice the modulation frequency (f1) of the laser beam LS emitted from the laser diode LD in a case where the gas GS is present. Thus, the substance detection processor 273 determines whether or not the waveform of an output signal shows signal characteristics of the frequency (2f1) being twice the modulation frequency (f1), based on the output signal of the AD conversion circuit 271, as detection processing of whether or not the gas GS is present.

Regarding the laser beam LS emitted from the laser diode LD, in a case where the gas GS (for example, methane gas) is not present in the detection space K, in the signal received by the photodiode PD, the frequency (2f1) being twice the modulation frequency (f1) of the laser beam LS emitted from the laser diode LD becomes 0 (zero).

Although detailed illustration in Fig. 6 is difficult, the laser beam LS is emitted in a state where the wavelength of the laser beam is modulated by the modulation frequency f1 having a very large value. In other words, a wavelength modulation speed (that is, speed at which the wavelength is swept in a range of ±0.05 nm from the center wavelength) corresponding to the modulation frequency f1 has a very large value, and this is a much larger value than a scanning speed of the pan tilt unit 15 described later. Thus, when the laser beam LS is emitted, the gas detection camera 1 has a need to emit the laser beam LS having a wavelength modulated at the modulation frequency f1, during a very short time.

The reason is that the gas detection camera 1 according to the present embodiment detects whether or not the gas GS is present, based on the wavelength characteristics of the received laser reflection light RV while performing scanning at a high speed in either the horizontal direction or the vertical direction, in order to early determine whether or not the gas GS is present in the detection space K.

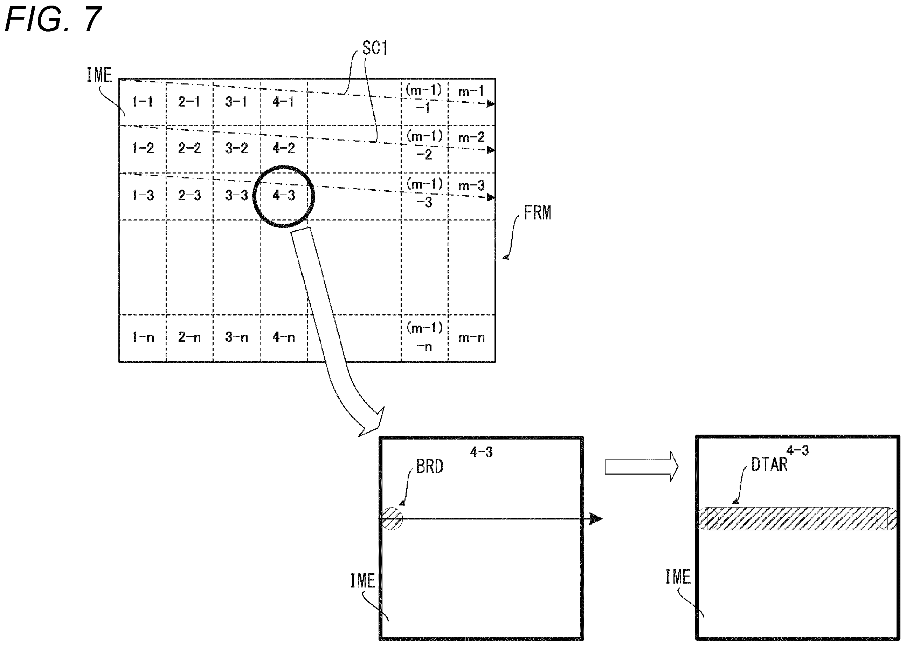

In a state where the gas detection camera 1 analyzes the wavelength characteristics of the laser reflection light RV, from a viewpoint of ensuring reliability of an analysis result, generally, for example, the wavelength characteristics of the received laser reflection light RV in one period is not sufficient, and wavelength characteristics of received light in a plurality of periods are required for determination of whether or not the signal having a frequency (2f1) being twice the modulation frequency (f1) is detected. The beam diameter of the laser beam LS is much smaller than the length of one pixel in the gas position image in order to perform detection even though the gas GS being the detection target substance of the gas detection camera 1 is present very small (see Fig. 7). As described above, in order to detect whether or not the very small amount of the gas GS is present, when the gas detection camera 1 performs detection for one pixel in the gas position image described later, the gas detection camera 1 irradiates one point in one pixel with the laser beam LS having a wavelength modulated in a plurality of periods, for performing detection of the gas GS at the one point.

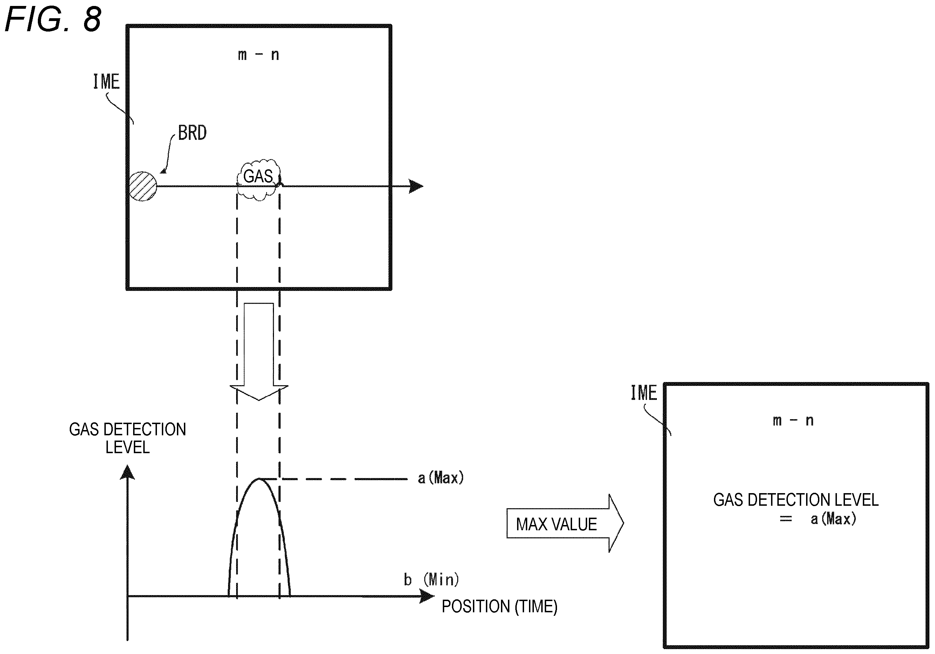

Fig. 7 is a schematic diagram illustrating the beam diameter BRD of the laser beam LS, which corresponds to each of m×n pixels constituting one frame FRM in a gas position image. Fig. 8 is a diagram illustrating a gas detection level in one pixel IME in the m-th row and the n-th column, m and n are integers of 2 or more. m corresponds to the number of columns constituting one frame FRM, and n corresponds to the number of rows constituting the one frame FRM. The one frame FRM of a gas position image generated by the display processor 28 is constituted by m×n pixels (that is, a pixel IME), for example. In Figs. 7 and 8 or the description thereof, the pixel in the m-th column and the n-th row is described as an "m-n" or an "m-n" pixel for convenience.

Fig. 7 illustrates a pixel IME of "4-3" (that is, the pixel IME in the fourth column and the third row). When the gas position image for one pixel IME is generated, the gas detection camera 1 according to the present embodiment performs irradiation with the laser beam LS having the modulated wavelength by driving the pan tilt unit 15. The irradiation is performed with the beam diameter BRD at a high speed in the horizontal direction and the vertical direction (that is, directions from the left side toward the right side on the paper surface of Fig. 7) (see the lower left side on the paper surface of Fig. 7).

Specifically, the gas detection camera 1 irradiates pixels in the first row (that is, a pixel of "m-1" from a pixel of "1-1") with the laser beam LS while performing scanning in the horizontal direction and the vertical direction such that the scanning direction becomes a slightly inclined direction SC1.

The beam diameter of the laser beam LS having the modulated wavelength has features of being much smaller than the length of the rectangular (for example, square) pixel IME in a transverse direction. This is for performing detection even though the gas GS being the detection target substance of the gas detection camera 1 is present very small. Details are described above.

As illustrated in the lower right on the paper surface of Fig. 7, in a case where scanning and irradiation with the laser beam LS are performed in the direction SC1, the entire area of the pixel IME of "4-3" is not irradiated with the laser beam LS, but only a partial area (detection target area DTAR) having a substantially rectangular shape in which the length of the beam diameter BRD is set as the height is irradiated with the laser beam LS. In other words, irradiation with the laser beam LS is not performed in the pixel IME (that is, a non-detection area in which determination of whether or not detection of the gas GS is performed is not performed is provided). This is provided for early detection of whether or not the gas GS is present by the gas detection camera 1 according to the present embodiment. That is, this is because, if driving of the pan tilt unit 15 is controlled such that the gas detection camera 1 irradiates the entire area of the pixel IME with the laser beam LS, the control takes time.

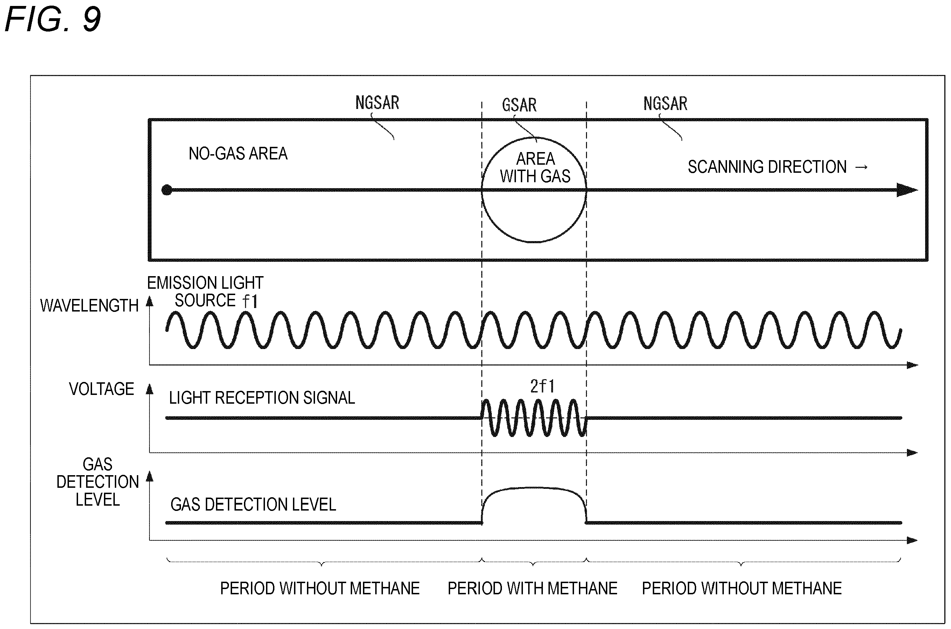

However, in the present embodiment, the gas detection camera 1 performs technical measures as follows in order to detect whether or not the gas GS is present in one pixel IME with uniform accuracy without degrading the detection accuracy of the gas GS even if the entire area of the pixel IME is not irradiated with the laser beam LS. Specifically, the gas detection camera 1 calculates the maximum value of a gas detection level (see Fig. 9) in one pixel IME based on the wavelength characteristics of the laser reflection light RV when irradiation with the laser beam LS is performed in the direction SC1, as the representative value of the detection result of the gas GS in the pixel IME (see the lower right on the paper surface of Fig. 8). For example, a unit of ppm-m (meter) is used for the gas detection level (example of substance detection level). The gas detection level is obtained from the light reception voltage based on a predetermined conversion expression by the substance detection processor 273. ppm-m is a unit indicating concentration when 1 m of the gas GS is present.

Since the non-detection area in which whether or not detection of the gas GS is performed is not determined is provided in one pixel IME, the determination result of whether or not detection of the gas GS is performed is discrete in the vertical direction in the example in Fig. 8. However, the resolution of the human eye that visually recognizes the visible light image on which the gas position image is superimposed is not as good as the resolution of a normal camera. Thus, for example, even though whether or not detection of the gas GS is performed is determined only discretely with respect to the vertical direction, it is assumed that there is no particular problem in the determination of whether or not detection of the gas GS is performed. The presence or absence of the detection of the gas GS.

In the lower left on the paper surface of Fig. 8, a horizontal axis indicates the position of one pixel IME (in other words, the irradiation time with the laser beam LS), and a vertical axis indicates the gas detection level in the one pixel IME. In Fig. 8, a indicates the maximum value of the gas detection level, and b indicates the minimum value of the gas detection level. Thus, the gas detection camera 1 calculates the representative value of the gas detection level in a pixel IME of "m-n" as the detection target of whether or not the gas GS is present, as the maximum value a.

Fig. 9 is a diagram illustrating correspondence between a horizontal scan image with the laser beam LS, wavelength characteristics of the laser beam LS having the modulated wavelength, signal strength characteristics of received laser reflection light RV, and the gas detection level. The top stage (first stage) in Fig. 9 illustrates a no-gas area NGSAR in which the gas GS is not present and a gas-present area GSAR in which the gas GS is present in the detection space K and illustrates a scanning direction with the laser beam LS from the left side to the right side on the paper surface of Fig. 9.

A horizontal axis in graphs at the second to fourth (bottom) stages in Fig. 9 corresponds to positions of the no-gas area NGSAR and the gas-present area GSAR illustrated at the top stage in Fig. 9. A vertical axis in the graph at the second stage in Fig. 9 indicates the wavelength of the laser beam LS. A vertical axis in the graph at the third stage in Fig. 9 indicates the voltage (light reception voltage, see Fig. 5) of the laser reflection light RV. A vertical axis in the graph at the fourth stage in Fig. 9 indicates the gas detection level. As described with reference to Fig. 8, the gas detection level is calculated for each pixel IME of pixels constituting the gas position image. In the example in Fig. 9, the gas-present area GSAR (period with methane) is provided at the center of the top stage. Thus, the voltage at the third stage and the gas detection level at the fourth stage in Fig. 9 show a reaction in the gas-present area GSAR. Specifically, in the voltage at the third stage in Fig. 9, a signal having a frequency (2f1) being twice the modulation frequency f1 is detected. In the gas detection level at the fourth stage in Fig. 9, a gas detection level exceeding a detection threshold value M (not illustrated) set in the substance detection processor 273 is detected.

In the no-gas area NGSAR (period without methane) other than the center portion at the top stage, the gas GS is not provided. Thus, there is no reaction in the gas-present area GSAR with the voltage at the third stage and at the gas detection level at the fourth stage in Fig. 9. Specifically, in the voltage at the third stage in Fig. 9, a signal having a frequency (2f1) being twice the modulation frequency f1 is not detected. In the gas detection level at the fourth stage in Fig. 9, a gas detection level which does not exceed the detection threshold value M (not illustrated) set in the substance detection processor 273 is detected.

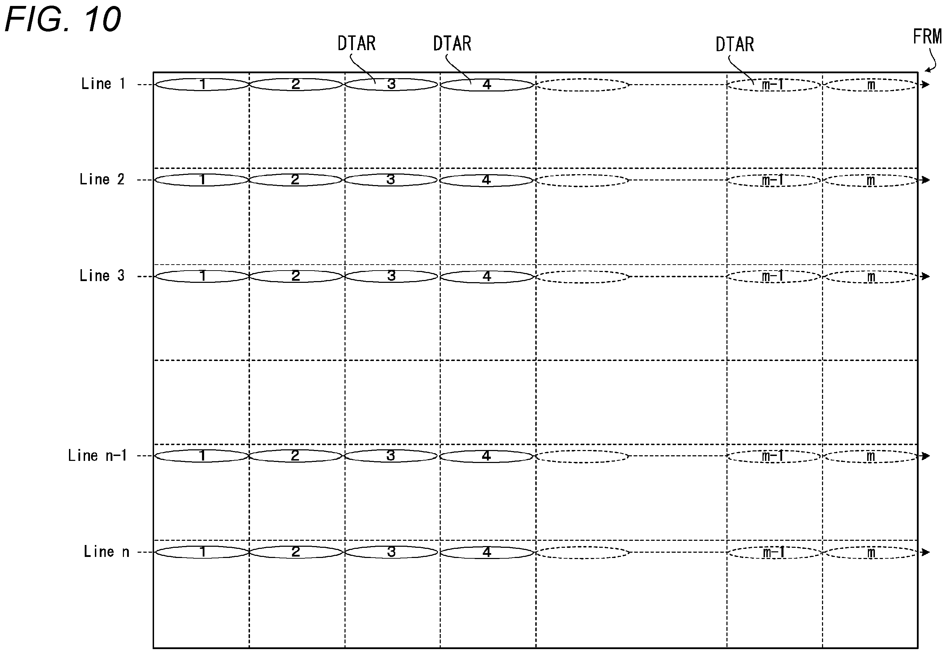

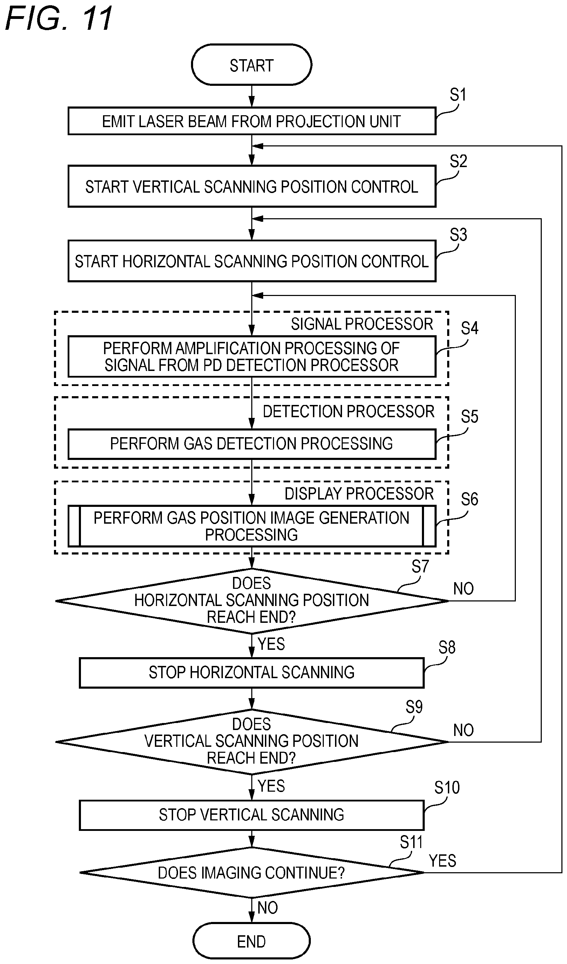

Fig. 10 is a schematic diagram illustrating the detection target area DTAR and a non-detection area of the gas GS in each of the m×n pixels constituting the one frame FRM in the gas position image. Fig. 11 is a flowchart illustrating an example of the gas detection operation corresponding to a scanning pattern illustrated in Fig. 10.

The one frame FRM of the gas position image illustrated in Fig. 10 is constituted by m×n pixels IME (see Fig. 7). The gas detection camera 1 according to the present embodiment generates a gas position image showing whether or not the gas GS is detected in the detection space K in a view angle which is the same as the view angle, for example, when the visible image is captured by the visible light camera VSC. The detection target area DTAR (see Fig. 7) irradiated with the laser beam LS having the modulated wavelength and the non-detection area which is not irradiated with the laser beam LS are provided in each of m×n pixels IME constituting one frame FRM in a gas position image. In the example in Fig. 10, the gas detection camera 1 performs scanning and irradiation with the laser beam LS having the modulated wavelength, at a high speed in the horizontal direction and performs scanning at a low speed in the vertical direction, by driving the pan tilt unit 15. As a result, whether or not detection of the gas GS is performed is determined for n lines in total in one frame FRM of the gas position image. In each of the lines, m detection target areas DTAR are provided. Thus, although only discrete detection of the gas GS is performed in the vertical direction, as described above, since the resolution of the human eye is lower than the resolution of a normal camera, irradiation with the laser beam LS is continuously performed in the horizontal direction. Accordingly, it is possible to consider that degradation of the detection accuracy of the gas GS is suppressed.

Fig. 10 illustrates an example in which irradiation and scanning with the laser beam LS are continuously performed at a high speed in the horizontal direction, and irradiation with the laser beam LS is discretely performed in the vertical direction. However, this is similarly applied to a case where the horizontal direction and the vertical direction are replaced with each other. That is, although not illustrated in Fig. 10, whether or not detection of the gas GS is performed may be determined for m lines in total (each line in which n detection target areas DTAR are provided) in one frame FRM of the gas position image. In this case, only discrete detection of the gas GS is performed in the horizontal direction. However, as described above, since the resolution of the human eye is lower than the resolution of a normal camera, irradiation with the laser beam LS is continuously performed in the vertical direction. Accordingly, it is possible to consider that degradation of the detection accuracy of the gas GS is suppressed.

In Fig. 11, the gas detection camera 1 emits a laser beam LS having a modulated wavelength from the projection unit PJ (S1). The gas detection camera 1 controls driving of the pan tilt unit 15 based on a PTU control signal from the controller 11 so as to start vertical scanning position control of the laser beam LS (S2) and to start horizontal scanning position control (S3). That is, as illustrated in Fig. 10, the gas detection camera 1 performs irradiation with the laser beam LS having the modulated wavelength within the same view angle as the view angle when capturing the visible image, while performing scanning at a low speed in the vertical direction and scanning at a high speed in the horizontal direction.

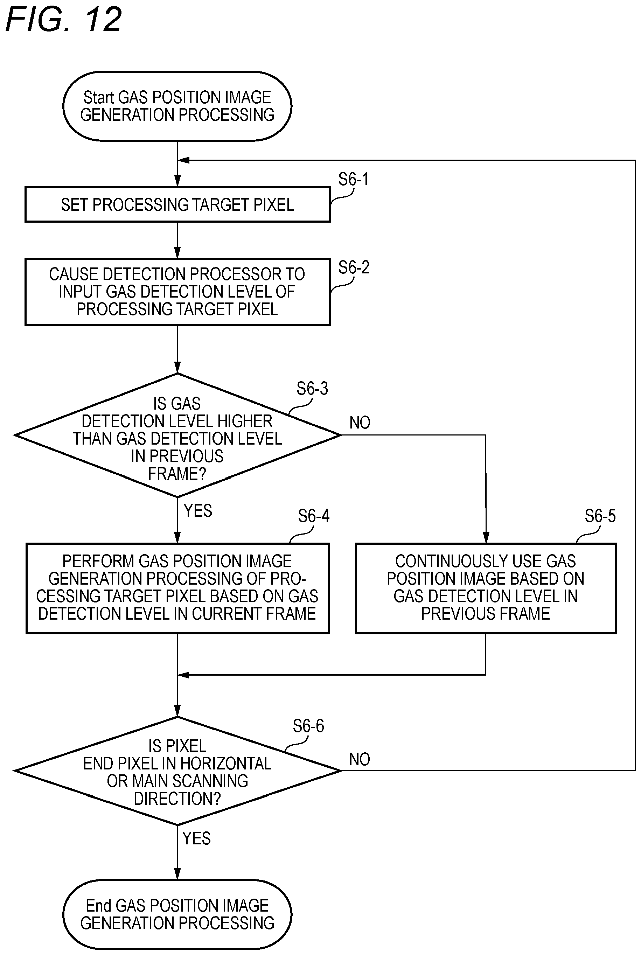

In the gas detection camera 1, laser reflection light RV being reflection light of the laser beam LS is received by the photodiode PD through the condenser lens CLZ. In the gas detection camera 1, amplification processing is performed on a signal output from the photodiode PD in the signal processor 26 (S4). In the gas detection camera 1, determination processing (in other words, gas detection processing) of whether or not detection of the gas GS is performed is performed based on the signal (in other words, wavelength characteristics of the laser reflection light RV) subjected to amplification processing in Step S4, in the detection processor 27 (S5). In the gas detection camera 1, processing (that is, gas position image generation processing) of generating a gas position image is performed based on a result of the determination processing of whether or not detection of the gas GS is performed, which is performed in Step S5 (for example, result of determination processing of whether or not detection of the gas GS is performed in each pixel, which is described with reference to Figs. 8 and 9), in the display processor 28 (S6). Details of gas position image generation processing in Step S6 will be described later with reference to Fig. 12.

In the gas detection camera 1, after Step S6, the controller 11 that controls driving of the pan tilt unit 15 determines whether or not the irradiation position with the laser beam LS reaches an end position among horizontal scanning positions (in other words, whether or not scanning with the laser beam LS in the horizontal direction is ended) (S7).

Here, a determination method in Step S7 and Step S9 will be briefly described.

The controller 11 acquires a driving control amount table (not illustrated) of the pan tilt unit 15, which is stored in the memory 13 in advance, and controls driving of the pan tilt unit 15 based on the driving control amount table. For example, in the driving control amount table, a driving control amount corresponding to an end position from a start position among horizontal scanning positions with the laser beam LS and a driving control amount corresponding to an end position from a start position among vertical scanning positions with the laser beam LS are stored corresponding to a scanning view angle (see Fig. 2) determined for generating a gas position image.
Thus, the controller 11 may determine whether or not the irradiation position with the laser beam LS reaches the end position among the horizontal scanning positions, based on the driving control amount table and the current driving control amount of the pan tilt unit 15. In the similar manner, the controller 11 may determine whether or not the irradiation position with the laser beam LS reaches the end position among the vertical scanning positions, based on the driving control amount table and the current driving control amount of the pan tilt unit 15. The method in which the controller 11 determines whether or not the irradiation position with the laser beam LS reaches the end position among the horizontal scanning positions or the vertical scanning positions is not limited to the above-described method using the driving control amount table. The determination method can be applied to a determination method in Step S7A and Step S9A illustrated in Fig. 17.

When scanning with the laser beam LS in the horizontal direction is not ended (S7, NO), the process of the gas detection camera 1 returns to Step S4. Then, the processes of Steps S4 to S6 are repeated until scanning with the laser beam LS in the horizontal direction is ended. In other words, the processes of Steps S4 to S6 are performed, for example, during a period in which scanning with the laser beam LS is performed at a high speed in the horizontal direction in a case where scanning with the laser beam LS is performed at a high speed in the horizontal direction.

When it is determined that scanning with the laser beam LS in the horizontal direction is ended (S7, YES), the gas detection camera 1 stops scanning with the laser beam LS in the horizontal direction (S8). In the gas detection camera 1, after Step S8, the controller 11 that controls driving of the pan tilt unit 15 determines whether or not the irradiation position with the laser beam LS reaches an end position among the vertical scanning positions (in other words, whether or not scanning with the laser beam LS in the vertical direction is ended) (S9).

When scanning with the laser beam LS in the vertical direction is not ended (S9, NO), the process of the gas detection camera 1 returns to Step S3. Then, the processes of Steps S3 to S6 are repeated until scanning with the laser beam LS in the vertical direction is ended. In other words, the processes of Steps S3 to S6 are performed, for example, during a period in which scanning with the laser beam LS is performed at a low speed in the vertical direction in a case where scanning with the laser beam LS is performed at a low speed in the vertical direction.

When it is determined that scanning with the laser beam LS in the vertical direction is ended (S9, YES), the gas detection camera 1 stops scanning with the laser beam LS in the vertical direction (S10). Thus, irradiation with the laser beam LS for one frame FRM in a gas position image is completed. After Step S10, when image capturing (for example, capturing of the visible image) in the gas detection camera 1 continues (S11, YES), the process of the gas detection camera 1 returns to Step S2.

When image capturing (for example, capturing of the visible image) in the gas detection camera 1 does not continue (S11, NO), it is not necessary to perform, for example, determination processing of whether or not detection of the gas GS is performed. Thus, the process of the gas detection camera 1 is ended.

Fig. 12 is a flowchart illustrating an example of details of gas position image generation processing of Step S6 in Fig. 11. The gas position image generation processing illustrated in Fig. 12 is performed, for example, by using one of pixels constituting the gas position image, as a processing target pixel.

In Fig. 12, the display processor 28 sets a processing target pixel (for example, one of pixels constituting the gas position image) of the gas position image generation processing (S6-1). The display processor 28 acquires (inputs) a gas detection level of the processing target pixel set in Step S6-1, based on an output from the detection processor 27 (S6-2).

The display processor 28 compares the gas detection level of the processing target pixel in the current frame, which is set in Step S6-1, to the gas detection level of the same corresponding processing target pixel in a frame (previous frame) just before the current frame (S6-3). When it is determined that the gas detection level of the processing target pixel in the current frame is higher than the gas detection level of the same corresponding processing target pixel in the previous frame (S6-3, YES), the display processor 28 performs processing of generating a gas position image in the processing target pixel based on the gas detection level in the current frame (S6-4).

When it is determined that the gas detection level of the processing target pixel in the current frame is equal to or lower than the gas detection level of the same corresponding processing target pixel in the previous frame (S6-3, NO), the display processor 28 determines that the gas position image in the same processing target pixel in the previous frame is maintained and used (S6-5).

After Step S6-4 or Step S6-5, the display processor 28 determines whether or not the current processing target pixel (that is, set in Step S6-1) is an end pixel (last pixel) for the gas position image, in scanning with the laser beam LS in the horizontal direction or the main scanning direction (S6-6). When it is determined that the current processing target pixel is the end pixel (last pixel) for the gas position image, in scanning with the laser beam LS in the horizontal direction or the main scanning direction (S6-6, YES), the display processor 28 ends the gas position image generation processing illustrated in Fig. 12. Then, although not illustrated in Fig. 12, the display processor 28 outputs the gas position image for one pixel, which is generated in Step S6-4 or Step S6-5 or is determined to be used, to the display controller 37. Every time the display controller 37 acquires the gas position image for one pixel, which is transmitted from the display processor 28, the display controller 37 displays the gas position image by superimposing (overlaying) the gas position image on a position of the corresponding pixel in the visible image displayed in the monitor 150.

When it is determined that the current processing target pixel is not the end pixel (last pixel) for the gas position image, in scanning with the laser beam LS in the horizontal direction or the main scanning direction (S6-6, NO), the display processor 28 sets the next processing target pixel (for example, pixel adjacent to the current processing target pixel) of the current processing target pixel (S6-1). Thus, the processes of Step S6-1 to Step S6-6 are repeated until it is determined that the current processing target pixel is the end pixel (last pixel) for the gas position image, in scanning with the laser beam LS in the horizontal direction or the main scanning direction.

Accordingly, the gas detection camera 1 performs the gas position image generation processing illustrated in Fig. 12 to immediately generate the gas position image corresponding to the detection result of whether or not the gas GS is present, for each pixel. Thus, it is possible to cause the user who monitors the detection space K to rapidly recognize whether or not there is the generation location of the gas GS in the detection space K.

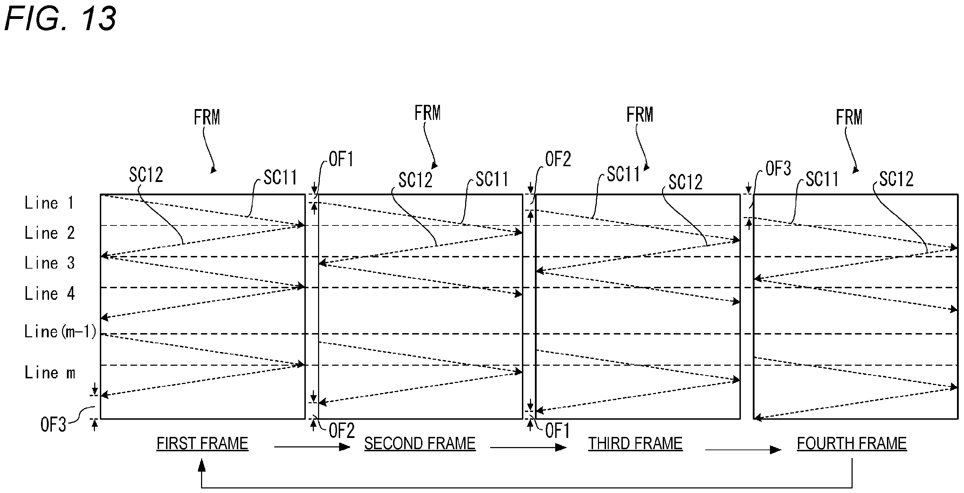

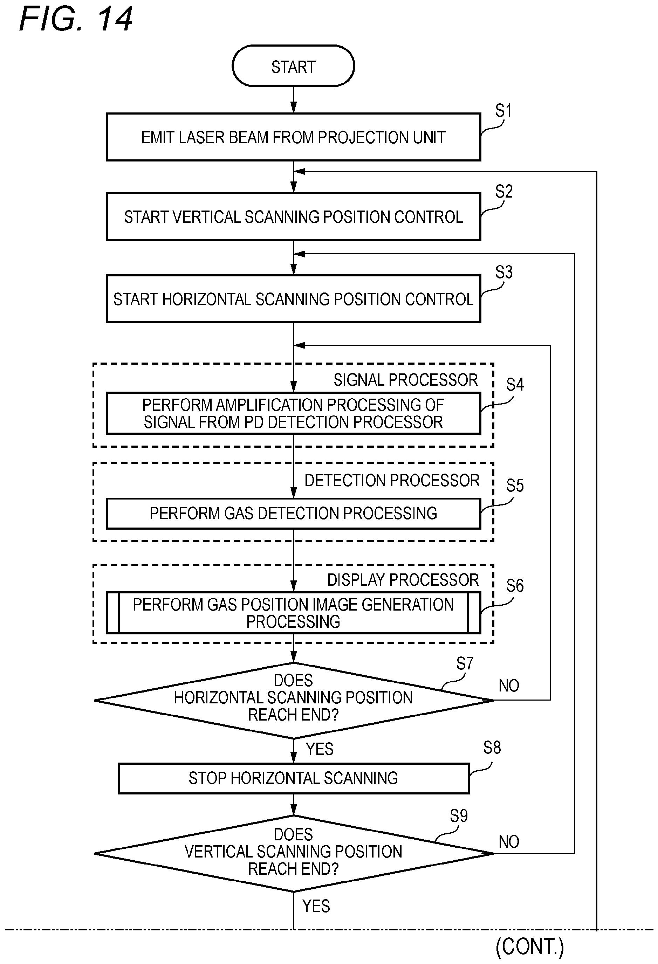

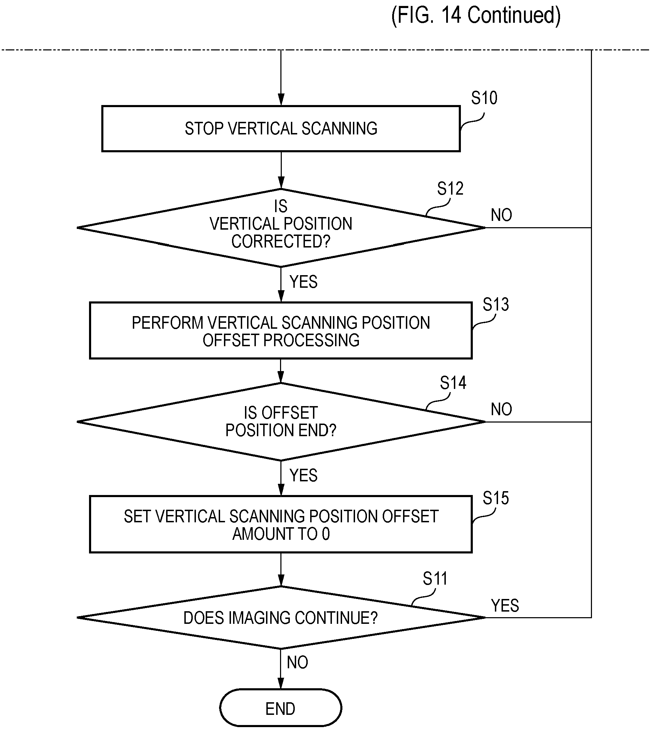

Fig. 13 is a pattern diagram illustrating a first example of the scanning pattern of the laser beam LS to which predetermined amounts of offsets OF1, OF2, and OF3 is applied in the vertical direction. Fig. 14 is a flowchart illustrating an example of the gas detection operation corresponding to the scanning pattern illustrated in Fig. 13. In the description with reference to Fig. 14, the same process as that in Fig. 11 is denoted by the same step number, and descriptions thereof will be simplified or omitted. Different contents will be described. Gas position image generation processing (Step S6) in Fig. 14 is the same processing as that in Fig. 12, and thus descriptions will be omitted.

In Fig. 13, four frames FRM of the gas position image (that is, four frames in the gas position image) are set as a unit. Irradiation with the laser beam LS is performed such that the irradiation position with the laser beam LS is slightly shifted in the frames FRM in the vertical direction (up-down direction on the paper surface of Fig. 13).

Specifically, in the first frame, the position at the upper left end portion of the frame FRM in Fig. 13 functions as a start position in scanning with the laser beam LS in the horizontal direction and the vertical direction. Irradiation with the laser beam LS is repeated from the start position in the horizontal direction (accurately, in order of a slightly-inclined direction SC11 → direction SC12) without applying an offset in the vertical direction.

Then, in the second frame, a position obtained by applying the predetermined offset OF1 in the vertical direction (specifically, lower side on the paper surface) from the upper left end portion of the frame FRM in Fig. 13 functions as a start position in scanning with the laser beam LS in the horizontal direction and the vertical direction. Irradiation with the laser beam LS is repeated from the start position in the horizontal direction (accurately, in order of a slightly-inclined direction SC11 → direction SC12).

Then, in the third frame, a position obtained by applying the predetermined offset OF2 in the vertical direction (specifically, lower side on the paper surface) from the upper left end portion of the frame FRM in Fig. 13 functions as a start position in scanning with the laser beam LS in the horizontal direction and the vertical direction. Irradiation with the laser beam LS is repeated from the start position in the horizontal direction (accurately, in order of a slightly-inclined direction SC11 → direction SC12).

Then, in the fourth frame, a position obtained by applying the predetermined offset OF3 in the vertical direction (specifically, lower side on the paper surface) from the upper left end portion of the frame FRM in Fig. 13 functions as a start position in scanning with the laser beam LS in the horizontal direction and the vertical direction. Irradiation with the laser beam LS is repeated from the start position in the horizontal direction (accurately, in order of a slightly-inclined direction SC11 → direction SC12). The magnitude of the offset OF3 may be the sum of the magnitude of the offset OF1 and the magnitude of the offset OF2. Thus, the gas detection camera 1 repeats irradiation with the laser beam LS in order of the direction SC11 → the direction SC12 by using four frames as the unit, and thus it is possible to totally perform determination processing of whether or not detection of the gas GS is performed.

In Fig. 14, in the gas detection camera 1, after Step S10, the controller 11 determines whether or not correction of the irradiation position (vertical position) with the laser beam LS in the vertical direction is performed for the next frame (for example, second frame) (S12). When correction of the irradiation position (vertical position) with the laser beam LS in the vertical direction is not performed for the next frame (S12, NO), the process of the gas detection camera 1 returns to Step S2 such that the vertical position of the laser beam LS is initialized to correspond to the next frame.

In the gas detection camera 1, when it is determined that correction of the irradiation position (vertical position) with the laser beam LS in the vertical direction is performed for the next frame (for example, second frame) (S12, YES), the controller 11 performs offset processing for applying a predetermined amount of offset to the start position in scanning with the laser beam LS in the vertical direction (S13). In Step S13, the controller 11 applies the offset OF1 to, for example, the second frame, applies the offset OF2 to, for example, the third frame, and applies the offset OF3 to, for example, the fourth frame (see Fig. 13).

After Step S13, the gas detection camera 1 determines whether or not an application position of the offset to the start position in scanning in the vertical direction in Step S13 is the predetermined last position (for example, application position of the offset OF3) (S14). When the application position of the offset is not the predetermined last position (for example, application position of the offset OF3) (S14, NO), the process of the gas detection camera 1 returns to Step S2 such that the vertical position of the laser beam LS is initialized to correspond to the next frame.

When it is determined that the application position of the offset to the start position in scanning in the vertical direction in Step S13 is the predetermined last position (for example, application position of the offset OF3) (S14, YES), the gas detection camera 1 sets the application amount of the offset to the start position in scanning in the vertical direction to be a predetermined initial value (for example, zero) (S15). The process next to Step S15 is Step S11, and this is the same as that in Fig. 11. Thus, descriptions thereof will be omitted.

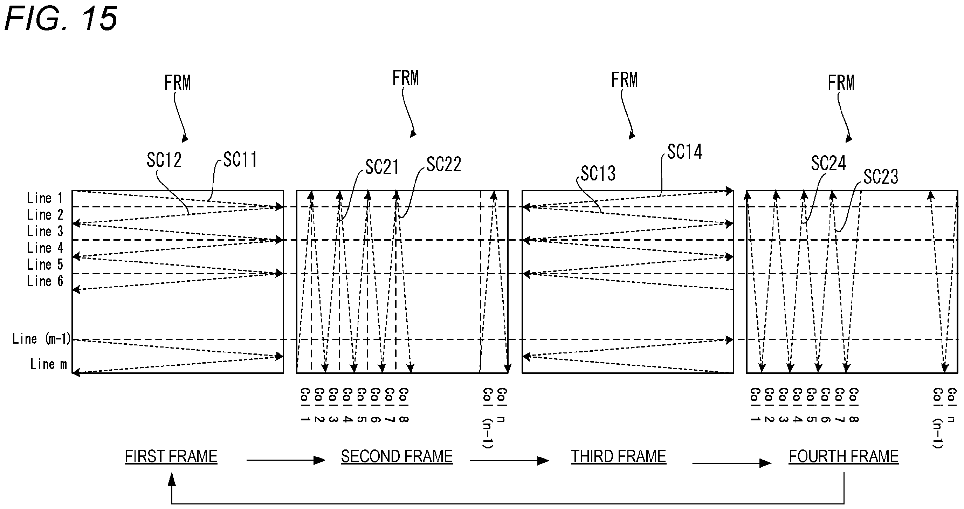

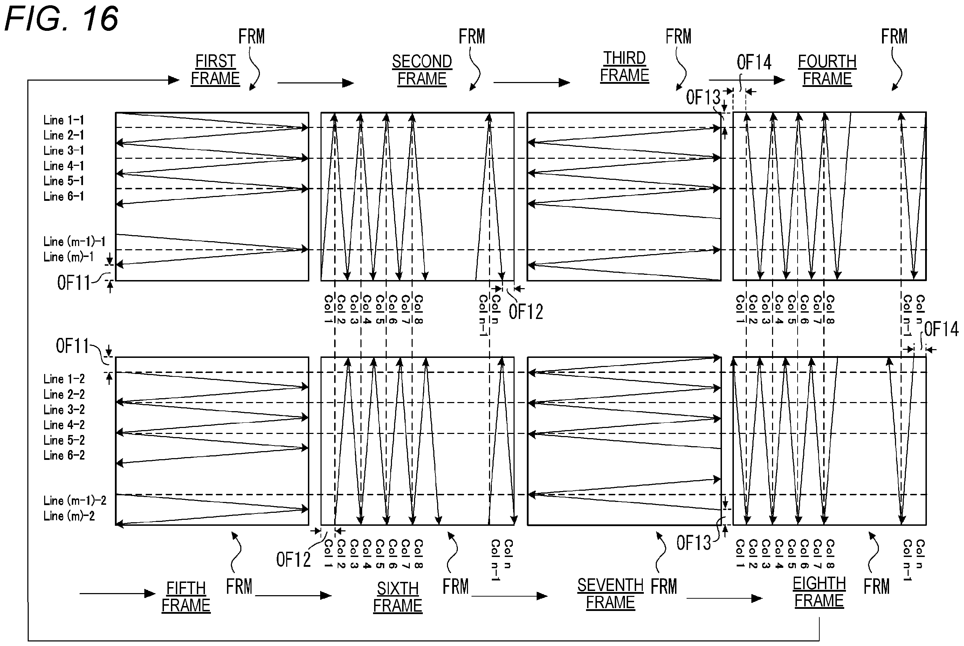

Fig. 15 is a pattern diagram illustrating a first example of the scanning pattern of the laser beam LS, in which horizontal high-speed scanning and vertical high-speed scanning are alternately repeated for each frame FRM. Fig. 16 is a pattern diagram illustrating a second example of the scanning pattern of the laser beam LS, in which horizontal high-speed scanning and vertical high-speed scanning are alternately repeated for each frame FRM.

In Fig. 15, four frames FRM of the gas position image (that is, four frames in the gas position image) are set as a unit. For each frame FRM, the main scanning direction (that is, a direction in which irradiation and scanning with the laser beam LS are continuously performed. The same applies to the following) of the laser beam LS is switched between the horizontal direction and the vertical direction.

Specifically, in the first frame, the position at the upper left end portion of the frame FRM in Fig. 15 functions as a start position in scanning with the laser beam LS in the horizontal direction and the vertical direction. Irradiation with the laser beam LS is repeated from the start position in the horizontal direction (accurately, in order of a slightly-inclined direction SC11 → direction SC12). In the first frame, scanning is performed m/2 times (in the descriptions with reference to Figs. 15 and 16, m: even number of 2 or more) in the direction SC11, and scanning is performed m/2 times in the direction SC12. As a result, scanning with the laser beam LS is performed m times in total in the substantially horizontal direction. The last position (that is, position at the lower left end portion of the frame FRM) among scanning positions of the laser beam LS in the first frame serves as the start position among scanning positions of the laser beam LS in the next frame FRM (that is, second frame). Thus, the gas detection camera 1 can minimize the driving control amount of the pan tilt unit 15 for each frame FRM in the gas position image, and thus it is possible to continuously perform detection processing of the gas GS.

Then, in the second frame, the position at the lower left end portion of the frame FRM in Fig. 15 functions as a start position in scanning with the laser beam LS in the horizontal direction and the vertical direction. Irradiation with the laser beam LS is repeated from the start position in the vertical direction (accurately, in order of a slightly-inclined direction SC21 → direction SC22). In the second frame, scanning is performed n/2 times (in the descriptions with reference to Figs. 15 and 16, n: even number of 2 or more) in the direction SC21, and scanning is performed n/2 times in the direction SC 22. As a result, scanning with the laser beam LS is performed n times in total in the substantially vertical direction. The last position (that is, position at the lower right end portion of the frame FRM) among scanning positions of the laser beam LS in the second frame serves as the start position among scanning positions of the laser beam LS in the next frame FRM (that is, third frame). Thus, the gas detection camera 1 can minimize the driving control amount of the pan tilt unit 15 for each frame FRM in the gas position image, and thus it is possible to continuously perform detection processing of the gas GS.

Then, in the third frame, the position at the lower right end portion of the frame FRM in Fig. 15 functions as a start position in scanning with the laser beam LS in the horizontal direction and the vertical direction. Irradiation with the laser beam LS is repeated from the start position in the vertical direction (accurately, in order of a slightly-inclined direction SC13 → direction SC14). In the third frame, scanning is performed m/2 times in the direction SC13, and scanning is performed m/2 times in the direction SC14. As a result, scanning with the laser beam LS is performed m times in total in the substantially horizontal direction. The last position (that is, position at the upper right end portion of the frame FRM) among scanning positions of the laser beam LS in the third frame serves as the start position among scanning positions of the laser beam LS in the next frame FRM (that is, fourth frame). Thus, the gas detection camera 1 can minimize the driving control amount of the pan tilt unit 15 for each frame FRM in the gas position image, and thus it is possible to continuously perform detection processing of the gas GS.

Then, in the fourth frame, the position at the upper right end portion of the frame FRM in Fig. 15 functions as a start position in scanning with the laser beam LS in the horizontal direction and the vertical direction. Irradiation with the laser beam LS is repeated from the start position in the vertical direction (accurately, in order of a slightly-inclined direction SC23 → direction SC24). In the fourth frame, scanning is performed n/2 times in the direction SC23, and scanning is performed n/2 times in the direction SC24. As a result, scanning with the laser beam LS is performed n times in total in the substantially vertical direction. The last position (that is, position at the upper left end portion of the frame FRM) among scanning positions of the laser beam LS in the fourth frame serves as the start position among scanning positions of the laser beam LS in the next frame FRM (that is, fifth frame). Thus, the gas detection camera 1 can minimize the driving control amount of the pan tilt unit 15 for each frame FRM in the gas position image, and thus it is possible to continuously perform detection processing of the gas GS.

In Fig. 16, eight frames FRM of the gas position image (that is, eight frames in the gas position image) are set as a unit. For each frame FRM, the main scanning direction (that is, a direction in which irradiation and scanning with the laser beam LS are continuously performed. The same applies to the following) of the laser beam LS is switched between the horizontal direction and the vertical direction.

Specifically, in the first frame, the position at the upper left end portion of the frame FRM in Fig. 16 functions as a start position in scanning with the laser beam LS in the horizontal direction and the vertical direction. Irradiation with the laser beam LS is repeated from the start position in the horizontal direction (accurately, in order of a slightly-inclined diagonal lower right direction → diagonal lower left direction). In the first frame, scanning is performed m/2 times in the diagonal lower right direction, and scanning is performed m/2 times in the diagonal lower left direction. As a result, scanning with the laser beam LS is performed m times in total in the substantially horizontal direction. A position obtained by applying a predetermined amount of offset OF11 in a vertical downward direction from the last position (that is, position at the lower left end portion of the frame FRM) among scanning positions of the laser beam LS in the first frame serves as the start position among scanning positions of the laser beam LS in the next frame FRM (that is, second frame). Thus, the gas detection camera 1 can reduce a movement amount of the pan tilt unit 15 from the start position for irradiation with the laser beam LS in the second frame only by applying the predetermined amount of offset OF11 from the last position among scanning positions in the first frame. Thus, it is possible to continuously perform detection processing of the gas GS.

Then, in the second frame, the position at the lower left end portion of the frame FRM in Fig. 16 functions as a start position in scanning with the laser beam LS in the horizontal direction and the vertical direction. Irradiation with the laser beam LS is repeated from the start position in the vertical direction (accurately, in order of a slightly-inclined diagonal upper right direction → diagonal lower right direction). In the second frame, scanning is performed n/2 times in the diagonal upper right direction, and scanning is performed n/2 times in the diagonal lower right direction. As a result, scanning with the laser beam LS is performed n times in total in the substantially vertical direction. A position obtained by applying a predetermined amount of offset OF12 in a horizontal rightward direction from the last position (that is, position at the lower right end portion of the frame FRM) among scanning positions of the laser beam LS in the second frame serves as the start position among scanning positions of the laser beam LS in the next frame FRM (that is, third frame). Thus, the gas detection camera 1 can reduce a movement amount of the pan tilt unit 15 from the start position for irradiation with the laser beam LS in the third frame only by applying the predetermined amount of offset OF12 from the last position among scanning positions in the second frame. Thus, it is possible to continuously perform detection processing of the gas GS.

Then, in the third frame, the position at the lower right end portion of the frame FRM in Fig. 16 functions as a start position in scanning with the laser beam LS in the horizontal direction and the vertical direction. Irradiation with the laser beam LS is repeated from the start position in the horizontal direction (accurately, in order of a slightly-inclined diagonal upper left direction → diagonal upper right direction). In the third frame, scanning is performed m/2 times in the diagonal upper left direction, and scanning is performed m/2 times in the diagonal upper right direction. As a result, scanning with the laser beam LS is performed m times in total in the substantially horizontal direction. A position obtained by applying a predetermined amount of offset OF13 in a vertical upward direction from the last position (that is, position at upper right end portion of the frame FRM) among scanning positions of the laser beam LS in the third frame serves as the start position among scanning positions of the laser beam LS in the next frame FRM (that is, fourth frame). Thus, the gas detection camera 1 can reduce a movement amount of the pan tilt unit 15 from the start position for irradiation with the laser beam LS in the fourth frame only by applying the predetermined amount of offset OF13 from the last position among scanning positions in the third frame. Thus, it is possible to continuously perform detection processing of the gas GS.

Then, in the fourth frame, the position at the upper right end portion of the frame FRM in Fig. 16 functions as a start position in scanning with the laser beam LS in the horizontal direction and the vertical direction. Irradiation with the laser beam LS is repeated from the start position in the vertical direction (accurately, in order of a slightly-inclined diagonal lower left direction → diagonal upper left direction). In the fourth frame, scanning is performed n/2 times in the diagonal lower left direction, and scanning is performed n/2 times in the diagonal upper left direction. As a result, scanning with the laser beam LS is performed n times in total in the substantially vertical direction. A position obtained by applying a predetermined amount of offset OF14 in a horizontal leftward direction from the last position (that is, position at the upper right end portion of the frame FRM) among scanning positions of the laser beam LS in the fourth frame serves as the start position among scanning positions of the laser beam LS in the next frame FRM (that is, fifth frame) before the offset OF11 is applied further. Thus, the gas detection camera 1 can reduce a movement amount of the pan tilt unit 15 from the start position for irradiation with the laser beam LS in the fifth frame only by applying the predetermined amount of offset OF14 from the last position among scanning positions in the fourth frame. Thus, it is possible to continuously perform detection processing of the gas GS.

Then, in the fifth frame, a position obtained by further applying the offset OF11 from a position of the upper left end portion of the frame FRM in Fig. 16 functions as a start position in scanning with the laser beam LS in the horizontal direction and the vertical direction. Irradiation with the laser beam LS is repeated from the start position in the horizontal direction (accurately, in order of a slightly-inclined diagonal lower right direction → diagonal lower left direction). In the fifth frame, scanning is performed m/2 times in the diagonal lower right direction, and scanning is performed m/2 times in the diagonal lower left direction. As a result, scanning with the laser beam LS is performed m times in total in the substantially horizontal direction. A position obtained by further applying the offset OF12 in the horizontal rightward direction from the last position among scanning positions of the laser beam LS in the fifth frame serves as the start position among scanning positions of the laser beam LS in the next frame FRM (that is, second frame). Thus, the gas detection camera 1 can reduce a movement amount of the pan tilt unit 15 from the start position for irradiation with the laser beam LS in the sixth frame only by applying the predetermined amount of offset OF11 from the last position among scanning positions in the fifth frame. Thus, it is possible to continuously perform detection processing of the gas GS.

Then, in the sixth frame, a position obtained by further applying the offset OF12 in the horizontal rightward direction from a position of the lower left end portion of the frame FRM in Fig. 16 functions as a start position in scanning with the laser beam LS in the horizontal direction and the vertical direction. Irradiation with the laser beam LS is repeated from the start position in the vertical direction (accurately, in order of a slightly-inclined diagonal upper right direction → diagonal lower right direction). In the sixth frame, scanning is performed n/2 times in the diagonal upper right direction, and scanning is performed n/2 times in the diagonal lower right direction. As a result, scanning with the laser beam LS is performed n times in total in the substantially vertical direction. A position obtained by further applying the offset OF13 in the vertical upward direction from the last position among scanning positions of the laser beam LS in the sixth frame serves as the start position among scanning positions of the laser beam LS in the next frame FRM (that is, seventh frame). Thus, the gas detection camera 1 can reduce a movement amount of the pan tilt unit 15 from the start position for irradiation with the laser beam LS in the seventh frame only by applying the predetermined amount of offset OF13 from the last position among scanning positions in the sixth frame. Thus, it is possible to continuously perform detection processing of the gas GS.

Then, in the seventh frame, a position obtained by further applying the offset OF13 in the vertical upward direction from a position of the lower right end portion of the frame FRM in Fig. 16 functions as a start position in scanning with the laser beam LS in the horizontal direction and the vertical direction. Irradiation with the laser beam LS is repeated from the start position in the horizontal direction (accurately, in order of a slightly-inclined diagonal upper left direction → diagonal upper right direction). In the seventh frame, scanning is performed m/2 times in the diagonal upper left direction, and scanning is performed m/2 times in the diagonal upper right direction. As a result, scanning with the laser beam LS is performed m times in total in the substantially horizontal direction. A position obtained by further applying the offset OF14 in the horizontal leftward direction from the last position among scanning positions of the laser beam LS in the seventh frame serves as the start position among scanning positions of the laser beam LS in the next frame FRM (that is, eighth frame). Thus, the gas detection camera 1 can reduce a movement amount of the pan tilt unit 15 from the start position for irradiation with the laser beam LS in the eighth frame only by applying the predetermined amount of offset OF14 from the last position among scanning positions in the seventh frame. Thus, it is possible to continuously perform detection processing of the gas GS.

Then, in the eighth frame, a position obtained by further applying the offset OF14 in the horizontal leftward direction from a position of the upper right end portion of the frame FRM in Fig. 16 functions as a start position in scanning with the laser beam LS in the horizontal direction and the vertical direction. Irradiation with the laser beam LS is repeated from the start position in the vertical direction (accurately, in order of a slightly-inclined diagonal lower left direction → diagonal upper left direction). In the eighth frame, scanning is performed n/2 times in the diagonal lower left direction, and scanning is performed n/2 times in the diagonal upper left direction. As a result, scanning with the laser beam LS is performed n times in total in the substantially vertical direction. The last position (that is, position at the upper left end portion of the frame FRM) among scanning positions of the laser beam LS in the eighth frame serves as the start position among scanning positions of the laser beam LS in the next frame FRM (that is, ninth frame). Thus, the gas detection camera 1 can use the last position among scanning positions in the eighth frame as the start position for irradiation with the laser beam LS in the ninth frame. Thus, it is possible to reduce a movement amount of the pan tilt unit 15 and to continuously perform detection processing of the gas GS.

Fig. 16A is a diagram illustrating an example of determination of the horizontal high-speed scanning based on the user operation. Fig. 16B is a diagram illustrating an example of determination of the vertical high-speed scanning based on the user operation.

As illustrated in Fig. 16A, for example, in a case where one frame FRM of the gas position image is displayed in the monitor 150, if a rectangular-like frame SLAR1 is designated by a user operation on the monitor 150 (for example, touch panel), the controller 11 determines that high-speed scanning is performed in the transverse direction being a longitudinal direction of the rectangle. The designation based on the user operation may be a touch operation of the user on the monitor 150 or may be performed based on a cursor CSR by the user using a mouse (not illustrated). Thus, the gas detection camera 1 can easily determine the main scanning direction of the laser beam LS having the modulated wavelength, by a simple user operation of designating a rectangular shape which allows the longitudinal direction to be simply determined.

As illustrated in Fig. 16B, for example, in a case where one frame FRM of the gas position image is displayed in the monitor 150, if a rectangular-like frame SLAR2 is designated by a user operation on the monitor 150 (for example, touch panel), the controller 11 determines that high-speed scanning is performed in the vertical direction being the longitudinal direction of the rectangle. Thus, the gas detection camera 1 can easily determine the main scanning direction of the laser beam LS having the modulated wavelength, by a simple user operation of designating a rectangular shape which allows the longitudinal direction to be simply determined.

Fig. 17 is a flowchart illustrating an example of the gas detection operation corresponding to the scanning pattern illustrated in Fig. 15 or 16. In the description with reference to Fig. 17, the same process as that in Fig. 11 is denoted by the same step number, and descriptions thereof will be simplified or omitted. Different contents will be described. Gas position image generation processing (Step S6) in Fig. 17 is the same processing as that in Fig. 12, and thus descriptions will be omitted.

In Fig. 17, in the gas detection camera 1, after Step S1, the controller 11 sets a scanning direction with the laser beam LS in a frame as the current processing target (S1A). The process of Step S1A may be performed before Step S1. For example, the controller 11 sets the horizontal direction to be the main scanning direction, in the frame as the current processing target and sets the vertical direction to be the sub-scanning direction. Regarding the first frame, the controller may set a scanning direction and a scanning start point in initial settings stored in the memory in advance. Regarding scanning of the second frame, when the start point in the scanning direction is changed from the left side of the frame to the right side, or from the upper side to the lower side, or is changed to the reversals, the settings may also be changed.

After Step S1A, the gas detection camera 1 controls driving of the pan tilt unit 15 based on a PTU control signal from the controller 11 so as to start scanning position control of the laser beam LS in the sub-scanning direction (for example, vertical direction) (S2A) and to start scanning control in the main scanning direction (for example, horizontal direction) (S3A). That is, as illustrated in Fig. 15 or 16, the gas detection camera 1 performs irradiation with the laser beam LS having the modulated wavelength within the same view angle as the view angle when capturing the visible image, while performing scanning at a low speed in the vertical direction and scanning at a high speed in the horizontal direction.

In the gas detection camera 1, after Step S4 to Step S6, the controller 11 that controls driving of the pan tilt unit 15 determines whether or not the irradiation position with the laser beam LS reaches an end position among main scanning positions (in other words, whether or not scanning with the laser beam LS in the main scanning direction is ended) (S7A).

When scanning with the laser beam LS in the main scanning direction is not ended (S7A, NO), the process of the gas detection camera 1 returns to Step S4. Then, the processes of Steps S4 to S6 are repeated until scanning with the laser beam LS in the main scanning direction is ended. In other words, the processes of Steps S4 to S6 are performed, for example, during a period in which scanning with the laser beam LS is performed at a high speed in the main scanning direction in a case where scanning with the laser beam LS is performed at a high speed in the main scanning direction.

When it is determined that scanning with the laser beam LS in the main scanning direction is ended (S7, YES), the gas detection camera 1 stops scanning with the laser beam LS in the main scanning direction (S8A). In the gas detection camera 1, after Step S8, the controller 11 that controls driving of the pan tilt unit 15 determines whether or not the irradiation position with the laser beam LS reaches an end position among sub-scanning positions (in other words, whether or not scanning with the laser beam LS in the sub-scanning direction is ended) (S9A).

When scanning with the laser beam LS in the sub-scanning direction is not ended (S9A, NO), the process of the gas detection camera 1 returns to Step S3A. Then, the processes of Steps S3A to S6 are repeated until scanning with the laser beam LS in the sub-scanning direction is ended. In other words, the processes of Steps S3A to S6 are performed, for example, during a period in which scanning with the laser beam LS is performed at a low speed in the sub-scanning direction in a case where scanning with the laser beam LS is performed at a low speed in the sub-scanning direction.

When it is determined that scanning with the laser beam LS in the sub-scanning direction is ended (S9A, YES), the gas detection camera 1 stops scanning with the laser beam LS in the sub-scanning direction (S10A). Thus, irradiation with the laser beam LS for one frame FRM in a gas position image is completed. In the gas detection camera 1, after Step S10A, the controller 11 sets a scanning direction with the laser beam LS in a frame next to the frame as the current processing target (S11A). For example, the controller 11 sets the vertical direction to be the main scanning direction, in the frame as the current processing target and sets the horizontal direction to be the sub-scanning direction. At this time, when the start point in the scanning direction is changed from the left side of the frame to the right side, or from the upper side to the lower side, or is changed to the reversals, the settings may also be changed.

In the gas detection camera 1, after Step S11A, the controller 11 determines whether or not correction of the irradiation position with the laser beam LS in the sub-scanning direction is performed for the next frame (for example, second frame) (S12A). When correction of the irradiation position with the laser beam LS in the sub-scanning direction is not performed for the next frame (S12A, NO), the process of the gas detection camera 1 returns to Step S2A, and scanning with the laser beam LS for the next frame is started again.

In the gas detection camera 1, when it is determined that correction of the irradiation position with the laser beam LS in the sub-scanning direction is performed for the next frame (for example, second frame) (S12A, YES), the controller 11 performs offset processing for applying a predetermined amount of offset to the start position in scanning with the laser beam LS in the sub-scanning direction (S13A). In Step S13A, the controller 11 applies the offset OF11 to, for example, the first and fifth frames, applies the offset OF12 to, for example, the second and sixth frames, applies the offset OF13 to, for example, the third and seventh frames, and applies the offset OF14 to, for example, the fourth and eighth frames (see Fig. 16).

After Step S13A, the gas detection camera 1 determines whether or not an application position of the offset to the start position in scanning in the sub-scanning direction in Step S13A is the predetermined last position (for example, application position of the offset OF14) (S14). When the application position of the offset is not the predetermined last position (for example, application position of the offset OF14 in the eight frames) (S14, NO), the process of the gas detection camera 1 returns to Step S2A, and scanning with the laser beam LS is started again from the start position in the main scanning direction of the laser beam LS, which is set in Step S11A and from the start position in the sub-scanning direction, which is set in Step S11A.

When it is determined that the application position of the offset to the start position in scanning in the vertical direction in Step S13A is the predetermined last position (for example, application position of the offset OF14 in the eighth frame) (S14, YES), the gas detection camera 1 sets the application amount of the offset to the start position in scanning in the sub-scanning direction to be a predetermined initial value (for example, zero) (S15A). At this time, when the start point in the scanning direction is changed from the left side of the frame to the right side, or from the upper side to the lower side, or is changed to the reversals, the settings may also be changed.

After Step S15A, when image capturing (for example, capturing of the visible image) in the gas detection camera 1 continues (S11, YES), the process of the gas detection camera 1 returns to Step S1A, and the scanning direction of the laser beam LS in a frame as a processing target is set. At this time, the controller may set a scanning direction and a scanning start point in initial settings stored in the memory in advance. When image capturing (for example, capturing of the visible image) in the gas detection camera 1 does not continue (S11, NO), it is not necessary to perform, for example, determination processing of whether or not detection of the gas GS is performed. Thus, the process of the gas detection camera 1 is ended.

Fig. 17 is a diagram illustrating a first example of the UI screen WD1 on which an overlay image IMPO1 obtained by superimposing a gas position image GSMG1 on a visible image IMG11 is displayed. Fig. 18 is a diagram illustrating a second example of the UI screen WD1 on which an overlay image IMPO2 obtained by superimposing a gas position image GSMG1 on a visible image IMG11 is displayed. Fig. 19 is a diagram illustrating an example of switching a display mode of an image to be displayed on the UI screen WD1.

The UI screen WD1 illustrated in Figs. 17 and 18 is, for example, generated by the output unit 38 of the gas detection camera 1 and is displayed in the monitor 150.

In the UI screen WD1 in Fig. 17, the overlay image IMPO1 is an example of display data generated by the display controller 37 of the gas detection camera 1. Specifically, the overlay image IMPO1 is an image generated by superimposing the gas position image GSMG1 on the visible image IMG11 captured by the visible light camera VSC. The user visually recognizes, for example, the overlay image IMPO1 displayed in the monitor 150, and thus can visually and intuitively recognize the generation location of the gas GS, which has difficulty in being directly displayed in the visible image, in the visible image (for example, piping chamber of a building) captured by the gas detection camera 1. In the example in Fig. 17, the generation location of the gas is three locations. The position of the gases GS1, GS2, and GS3 are displayed in a form of a heatmap in accordance with the gas detection level. It is possible to visually and intuitively determine the gas detection level (see Fig. 8, that is, concentration of the gas GS) of the gases GS1 to GS3, for example, by using the heatmap in which high concentration is set to be the red, and low concentration is set to be blue. The scale of the heatmap is indicated by, for example, a heatmap bar SMP1 displayed on the UI screen WD1.

In Fig. 17, the gas detection camera 1 is in the process of performing determination processing of whether or not detection of the gas GS is performed corresponding to the entirety of one frame in the visible image IMG11. Thus, a pixel area DT1 on which performing the determination processing of whether or not detection of the gas GS is performed is completed and a pixel area NDT1 on which the determination processing of whether or not detection of the gas GS is performed is not performed are shown in the entirety of one frame in the gas position image GSMG1, in the overlay image IMPO1 illustrated in Fig. 17.

A start and stop button BT1, a snap shot button BT2, a display switching button BT3, a gas concentration display area NM1, and an information field MX1 regarding top 10 pixel positions at which the concentration of the gas GS is high in the pixel area DT1 are displayed on the UI screen WD1.

If the start and stop button BT1 is pressed by a user operation, the gas detection camera 1 is instructed to simultaneously start or stop determination processing of whether or not detection of the gas GS is performed and capturing processing of a visible image.

If the snap shot button BT2 is pressed by a user operation, the gas detection camera 1 is instructed to preserve a snap shot of overlay images IMPO1 and IMPO2 at the time of pressing the button, in the memory (for example, memory 39).

If the display switching button BT3 is pressed by a user operation, the gas detection camera 1 is instructed to select any mode as a display mode of an image to be displayed on the UI screen WD1 generated by the output unit 38, among a camera mode corresponding to the visible image IMG11, an overlay mode corresponding to the overlay image IMPO2, a heatmap mode corresponding to the heatmap image (that is, gas position image GSMG1), and a detection overlay mode corresponding to an overlay image IMPO3.

In the gas concentration display area NM1, the maximum value in which the concentration of the gas GS is highest in the pixel area DT1 in which performing of the determination processing of whether or not detection of the gas GS is performed is completed and in an area USAR1 (see Fig. 18) designated by a user operation is displayed. The unit of the gas GS is ppw-m (meters) as described above, but is not limited thereto.

In the information field MX1, information regarding the top 10 pixel positions in maximum at which the concentration of the gas GS is high in the pixel area DT1 in which performing of the determination processing of whether or not detection of the gas GS is performed is completed or in the area USAR1 (see Fig. 18) designated by the user operation is displayed. The information regarding the pixel position is, for example, the value of the gas detection level, and an X coordinate and a Y coordinate indicating the position of the gas GS in the gas position image.

In Fig. 18, the gas detection camera 1 is in a state where performing determination processing of whether or not detection of the gas GS is performed corresponding to the entirety of one frame in the visible image IMG11 is completed. Thus, a pixel area DT2 on which performing the determination processing of whether or not detection of the gas GS is performed is completed is shown in the entirety of one frame in the gas position image GSMG1, in the overlay image IMPO2 illustrated in Fig. 18.

In Fig. 18, a partial area USAR1 is designated in the overlay image IMPO2 by a user operation. With such a designation of the area USAR1 in the overlay image IMPO2 displayed on the UI screen WD1, the output unit 38 in the gas detection camera 1 displays the maximum value in which the concentration of the gas GS is highest in the designated area USAR1, in the gas concentration display area NM1 and further displays the information regarding the top 10 pixel positions in maximum at which the concentration of the gas GS is high, in the information field MX2.

In Fig. 19, any one of the camera mode, the overlay mode, the heatmap mode, and the detection overlay mode is designated by pressing the display switching button BT3 with the user operation. If the designation operation is performed, an operation signal based on the designation operation is input to the controller 11 of the gas detection camera 1. The controller 11 instructs the output unit 38 to generate a UI screen including an image corresponding to any display mode, based on the input operation signal. Thus, the output unit 38 can generate the UI screen WD1 in which any one of the visible image IMG11, the overlay image IMPO2, the heatmap image (that is, gas position image GSMG1), and the overlay image IMPO3 is selected.

According to the visible image IMG11 corresponding to the camera mode, the user can recognize the state before the determination processing of whether or not detection of the gas GS is performed is started and can preserve the visible image IMG11 in the state before the start, in the gas detection camera 1, for example, by an operation of pressing the snap shot button BT2.

According to the overlay image IMPO2 corresponding to the overlay mode, the user can specifically recognize the contents of the gas position image GSMG1 obtained based on completion in performing the determination processing of whether or not detection of the gas GS is performed, with comparison to the contents of the visible image IMG11 as a background image.

According to the heatmap image (that is, gas position image GSMG1) corresponding to the heatmap mode, the user can early determine the position at which the gas GS is generated, in the gas position image in a state where the contents of the visible image IMG11 as the background image is omitted.

According to the overlay image IMPO3 corresponding to the detection overlay mode, the user can specifically recognize only a portion at which a predetermined amount of gas concentration is detected in the gas position image GSMG1 obtained based on completion in performing the determination processing of whether or not detection of the gas GS is performed, with comparison to the contents of the visible image IMG11 as the background image. Therefore, the user can clearly recognize only a location in which the gas GS having an amount exceeding a predetermined amount is detected, with comparison to the contents of the visible image IMG11 without degrading visibility of the visible image IMG11 in comparison to the overlay image IMPO2 corresponding to the overlay mode.

As described above, the gas detection camera 1 in the present embodiment holds the visible image of the detection space K (example of the detection area) of a substance in the memory 39, modulates the wavelength of a laser beam (example of the first non-visible light) from the laser diode LD, and emits the laser beam to the detection space K in the horizontal direction and vertical direction, from the projection unit PJ. In the gas detection camera 1, the condenser lens CLZ (example of the light receiving unit) receives the laser reflection light RV obtained in a manner that the laser beam LS having the modulated wavelength is transmitted through the gas GS and then is reflected by a reflection object on the background in the detection space K (in other words, laser reflection light in which a portion of a component having a specific wavelength is absorbed by the gas GS). In the gas detection camera 1, in the detection space K, the pan tilt unit 15 (example of the actuator) changes the emission direction of the laser beam LS in the projection unit PJ and the light reception direction of the laser reflection light RV in the condenser lens CLZ. In the gas detection camera 1, the display processor 28 (example of the detection processor) generates the gas position image (example of the substance position image) showing a detection result of whether or not the gas GS is present in the detection space K, based on the signal strength frequency characteristics of the laser reflection light RV. The gas detection camera 1 calculates a representative value indicating the detection result in one pixel for each of m (m: integer of 2 or more) × n (n: integer of 2 or more) pixels constituting one frame in the visible image and the gas position image, and displays a result obtained by superimposing the calculation result on a corresponding pixel in the visible image, in the monitor 150.

Thus, the gas detection camera 1 can acquire the detection result of whether or not the gas GS is present in each of pixels constituting the gas position image, considering frequency characteristics shown in the signal of the laser reflection light RV with respect to the laser beam LS having a wavelength modulated centering on a wavelength considering the absorption characteristics of the substance (for example, gas GS). The gas detection camera 1 schematically calculates the representative value indicating the detection result of whether or not the gas GS is present in one pixel, not the detection result of whether or not the gas GS in all pixels constituting the gas position image. Thus, it is possible to achieve both suppression of degradation in detection accuracy of the gas GS in the detection space K and early detection of the gas GS in the detection area K.

The beam diameter of the laser beam LS with which irradiation is performed from the gas detection camera 1 is smaller than the size of one of m×n pixels constituting the gas position image. Thus, the gas detection camera 1 irradiates only a partial area (detection target area DTAR) irradiated with the laser beam LS in one pixel, with the laser beam LS having a beam diameter smaller than the size of one pixel. Thus, it is possible to improve detection accuracy of whether or not the gas GS is present, which corresponds to the SN ratio of the gas position image.

In the gas detection camera 1, when the horizontal direction or the vertical direction is set to the main scanning direction of the laser beam LS in each of m×n pixels, the substance detection processor 273 calculates the representative value in one pixel based on the wavelength characteristics of the laser reflection light RV at a plurality of continuous points (irradiation positions) in one pixel. Thus, the gas detection camera 1 irradiates the partial area (detection target area DTAR) configured with the plurality of continuous irradiation positions with the laser beam LS, and thus it is possible to improve reliability of the representative value in one pixel in comparison to a case where only one point in one pixel is irradiated with the laser beam LS.

In the gas detection camera 1, when the horizontal direction or the vertical direction is set to the main scanning direction of the laser beam LS in each of m×n pixels, the substance detection processor 273 calculates the maximum value of the gas detection level in accordance with the wavelength characteristics of the laser reflection light RV at the plurality of continuous points (irradiation positions) in one pixel, as the representative value in one pixel. Thus, the gas detection camera 1 can detect whether or not the gas GS is present in one pixel IME with uniform accuracy without degrading the detection accuracy of the gas GS even if the entire area of the pixel IME is not irradiated with the laser beam LS.

In the gas detection camera 1, the controller 11 controls the pan tilt unit 15 (example of the actuator) such that the irradiation position in each frame in the vertical direction varies in horizontal scanning with the laser beam LS for each frame in the gas position image. Thus, the gas detection camera 1 can control the pan tilt unit 15 such that the irradiation position of the laser beam LS in a frame in the vertical direction varies for each frame of the gas position image, and thus it is possible to totally perform determination processing of whether or not detection of the gas GS is performed.

In the gas detection camera 1, the controller 11 controls the actuator such that the irradiation position in the vertical direction varies in a unit of four frames in the gas position image. Thus, the gas detection camera 1 can perform irradiation while slightly shifting the irradiation position with the laser beam LS in the vertical direction, for example, for each of four frames, and thus it is possible to early perform the determination processing of whether or not detection of the gas GS is performed, in a period for four frames.

In the gas detection camera 1, the controller 11 controls the pan tilt unit 15 (example of the actuator) in the odd-numbered frame of the gas position image such that the horizontal direction is set to the main scanning direction, and controls the pan tilt unit 15 (example of the actuator) in the even-numbered frame of the gas position image such that the vertical direction is set to the main scanning direction. Thus, in comparison to a case where scanning and irradiation with the laser beam LS are performed only in either the horizontal direction or the vertical direction for each frame, the gas detection camera 1 performs irradiation with the laser beam LS with replacing the horizontal direction or the vertical direction with each other for each frame. Thus, it is possible to totally perform determination processing of whether or not detection of the gas GS is performed.

The gas detection camera 1 controls the pan tilt unit 15 (example of the actuator) such that the irradiation position in the vertical direction varies in the odd-numbered frame, and controls the pan tilt unit 15 (example of the actuator) such that the irradiation position in the horizontal direction varies in the even-numbered frame. Thus, the gas detection camera 1 performs scanning while slightly shifting the start position or the end position in scanning with the laser beam LS by applying a predetermined amount of offset in the vertical direction or the horizontal direction, in addition to replacement with any of the horizontal direction and the vertical direction for each frame. Thus, it is possible to totally perform determination processing of whether or not detection of the gas GS is performed, with high accuracy.

The gas detection camera 1 controls the pan tilt unit 15 (example of the actuator) such that the irradiation position in the vertical direction or the irradiation position in the horizontal direction varies in a unit of eight frames in the gas position image. Thus, the gas detection camera 1 can perform irradiation while slightly shifting the irradiation position with the laser beam LS in the vertical direction or the horizontal direction, for example, for each of eight frames, and thus it is possible to early and totally perform the determination processing of whether or not detection of the gas GS is performed, in a period for eight frames.

In the gas detection camera 1, the controller 11 sets the main scanning direction of the laser beam LS to be either the horizontal direction or the vertical direction based on an operation signal in accordance with a user operation. The pan tilt unit 15 controls the emission direction of the laser beam LS in the main scanning direction set by the controller 11. Thus, the gas detection camera 1 can easily determine the main scanning direction of the laser beam LS having the modulated wavelength, by a simple user operation.

The gas detection camera 1 sets the main scanning direction of the laser beam LS in the designated area based on an operation signal corresponding to an area designation operation on the gas position image displayed in the monitor 150. Thus, the gas detection camera 1 can easily determine the main scanning direction of the laser beam LS having the modulated wavelength, by a simple operation of designating the area, on the gas position image.

The gas detection camera 1 sets the longitudinal direction of the designated area to be the main scanning direction of the laser beam LS and sets the short-side direction of the area to be the sub-scanning direction of the laser beam LS. Thus, the gas detection camera 1 can easily determine the main scanning direction of the laser beam LS having the modulated wavelength, for example, by a simple user operation of designating a rectangular shape which allows the longitudinal direction to be simply determined.

In a case where the area designated by a user operation is irradiated with the laser beam LS, the gas detection camera 1 calculates the representative value indicating the detection result in each of pixels constituting the area. The substance detection processor 273 displays a result obtained by superimposing the calculation result on the corresponding pixel in the visible image, in the monitor 150. Thus, the gas detection camera 1 can acquire the detection result of whether or not the gas GS is present, only in an area attracting attentions of the user, in the gas position image. Thus, it is possible to achieve both suppression of degradation in detection accuracy of the gas GS in the detection space K and early detection of the gas GS in the detection space K.

In the gas detection camera 1, the controller 11 sets the main scanning direction and the sub-scanning direction of the laser beam LS in accordance with a user operation on the area designated by a user operation. Thus, the gas detection camera 1 can select an area as a target for performing detection processing of whether or not the gas GS is present, and the main scanning direction and the sub-scanning direction of the laser beam LS in the area. Accordingly, it is possible to appropriately perform detection processing of whether or not the gas GS is present, which reflects the intention of the user.

### (Summary of Substance Detection Device and Substance Detection Method according to Present Disclosure)

Finally, the summary of the gas detection camera 1 according to the above-described embodiment will be described as follows, as an example of the summary of the substance detection device and the substance detection method according to the present disclosure.

An object of the gas detection camera 1 according to the above-described embodiment is to early specify a leak location of the minute gas GS of which the position is unknown, from a space (for example, a detection space K such as a piping chamber of a building) having a certain size. That is, the gas detection camera 1 prioritizes specifying the leak location rather than measuring the exact concentration of the gas GS leaking in the detection space K.

Here, in the space (for example, the detection space K such as a piping chamber of a building) having a certain size, in order to recognize a leak location of the gas GS of which the position is unknown, it is necessary to perform scanning while the laser beam LS is projected to a wide area for a position spaced from an installation position of the gas detection camera 1.

In a case where scanning with the laser beam LS is performed, if the gas GS having concentration of some degrees is present over a wide range, a possibility that it is possible to easily find the gas GS by using a laser scanning method being the well-known technology is high.

However, the gas GS leaked from a leak location of the gas GS is diffused as spreading to the periphery. Thus, for example, in a case where the leak location of the gas GS is small, if the device is spaced from the leak location of the gas GS, the gas GS is not detected. However, gas particles are normally supplied in the leak location of the gas GS and the vicinity thereof, and thus the gas having configuration of some degrees is present.

Therefore, if whether or not the gas GS is present is detected in the detection space K set as the detection target of the gas GS, and a result is displayed in a spot unit of the laser beam LS, it takes a very long time to end scanning of the entirety of one frame in the gas position image. In particular, if the leak location of the minute gas GS is in an area near the end of scanning, it takes time to detect the gas GS and display the gas position image.

Even though the gas detection level is displayed collectively on one pixel having a size larger than a spot position of the laser beam LS, all detection results of whether or not the gas GS is present in all spot position of the laser beam LS with which an area corresponding to one pixel is irradiated are to be aligned. Thus, it still takes time to display whether or not the gas GS is present.

Thus, the gas detection camera 1 according to the present embodiment performs irradiation with the laser beam LS having the modulated wavelength and display of the gas position image based on reception of the laser reflection light RV, in the monitor 150, in a manner as follows.
(1) The gas detection camera 1 continuously performs scanning with the laser beam LS having the modulated wavelength, in the visible image of the detection space K set as the detection target, in the main scanning direction. The scanning speed of the laser beam having the modulated wavelength is slower than the speed corresponding to one period for modulating the wavelength of the laser beam LS.
(2) The gas detection camera 1 divides the visible image of the detection space K set as the detection target in the main scanning direction and the sub-scanning direction, into a plurality of pixels. The gas detection camera 1 obtains the maximum value from a plurality of calculation values obtained from gas detection levels in a plurality of wavelength modulation periods, as the representative value in each pixel (see Fig. 10).
(3) The gas detection camera 1 generates the gas position image corresponding to the representative value (for example, maximum value) of one line at a time point at which continuous scanning of one line with the laser beam LS having the modulated wavelength in the main scanning direction is ended., for the space corresponding to each pixel. The gas detection camera 1 displays the gas position image in the monitor 150. For the space corresponding to one pixel, one line continuous scanning for a space corresponding to one pixel is performed to penetrate the space corresponding to each pixel arranged in the main scanning direction of the visible image. Generation and display of the gas position image based on calculation of the representative value of one line for each pixel arranged in the main scanning direction are repeated.
(4) After one line continuous scanning is ended to penetrate the space corresponding to the pixels arranged in the main scanning direction, the gas detection camera 1 shifts the start position in one line continuous scanning in the sub-scanning direction and performs continuous scanning to penetrate the space corresponding to the pixels in the next main scanning direction. The gas detection camera 1 repeats generation and display of the gas position image along with calculation of the representative value of the one line similar to (3), for each pixel arranged in the main scanning direction.
(5) The gas detection camera 1 compares the representative value of each pixel, which is calculated in continuous scanning of the next frame in the main scanning direction, to the representative value of the corresponding pixel in the previous frame. If the representative value in the next frame is higher than that in the previous frame, the gas detection camera 1 generates the gas position image of the pixel based on the new representative value and updates the display. Otherwise, the gas detection camera 1 maintains display of the gas position image of the pixel in the previous frame.

That is, in a frame unit, the gas detection camera 1 performs continuous scanning with the laser beam LS in the visible image of the detection space K set as the detection target, in the main scanning direction. However, in the sub-scanning direction, scanning of not all areas corresponding to the one pixel is performed by one laser scanning performed in the one frame. In the present embodiment, the gas detection camera 1 performs scanning of one line with the laser beam LS in one pixel of one frame in the main scanning direction, and performs discrete scanning across a plurality of frames in the sub-scanning direction. Thus, the gas detection camera 1 calculates the representative value of a plurality of lines and generates the gas position image, in a state where scanning of the plurality of lines is performed to pass through each pixel arranged in the main scanning direction in one frame. However, scanning of all areas corresponding to one pixel, in one frame is not performed in any case.

Thus, if scanning of even one line with the laser beam LS is performed on a space corresponding to pixels at the leak location of the minute gas GS and the vicinity thereof, in the main scanning direction, the gas detection camera 1 can detect leakage of the gas in this pixel. As a result, while scanning time per a frame of the detection space K set as the detection target is reduced, it is possible to early specify the pixel corresponding to the space in which the leak location of the minute gas is provided, and to early perform narrowing of a minute gas leak space.

In the present embodiment, the reason that the scanning speed of the laser beam LS having the modulated wavelength is slower than the speed corresponding to the wavelength modulation period, or the gas detection camera 1 obtains the representative value from a plurality of calculation values obtained from detection values (gas detection level) in each pixel in a plurality of modulation periods (see Fig. 10) is mainly based on the following descriptions. Specifically, in the detection space K, regarding the reflection object on the background irradiated with the laser beam LS from the gas detection camera 1, reflectivity varies depending on the position, and is not stable. Thus, in particular, in a case where continuous scanning in the main scanning direction is performed, even though wavelength modulation of the laser beam LS is performed, it is not possible to determine whether the change of the signal of the light reception is caused by an influence of the background or by wavelength modulation.

For example, in a case where the wavelength modulation of the laser beam is performed, but the wavelength modulation period is 1, the reflection object is changed by the irradiation position with the laser beam LS, which is irradiated from the gas detection camera 1. Thus, even though the signal having the twice frequency is shown in the signal strength frequency characteristics of the received light, it is difficult to recognize whether absorption of a portion of the wavelength component is performed by the gas GS, or an influence by the reflection object is provided, with high accuracy. However, as in the present embodiment, in a case where the wavelength modulation period has a very large value, in a case where a portion of the wavelength component is absorbed by the gas GS, the signal having the twice frequency is detected in the signal strength frequency characteristics of the received light with high accuracy. However, a possibility that the signal having the twice frequency is shown by the influence of the reflection object on the background is low. Thus, it is possible to perform recognition with high accuracy.

Hitherto, various embodiments are described with reference to the drawings, but the present invention is not limited to the above examples. It will be apparent to those skilled in the art that various changes and modifications can be made within the scope of the claims, and it is understood that the changes and modifications are included within the technical scope of the present invention. The components in the embodiment may be randomly combined in a range without departing from the gist of the invention.

This application is based on Japanese patent application No. 2017-174389 filed on September 11, 2017, the contents of which are incorporated herein by reference.

### INDUSTRIAL APPLICABILITY

The present disclosure is useful as a substance detection device and a substance detection method for achieving both suppression of degradation in detection accuracy of a substance in a detection area and early detection of the substance in the detection area.

### REFERENCE SIGNS LIST

- 1:: gas detection camera
- 11:: controller
- 13, 39:: memory
- 15:: pan tilt unit
- 20, 41:: processor
- 26:: signal processor
- 27:: detection processor
- 28:: display processor
- 31:: imaging lens
- 33:: image sensor
- 35:: signal processor
- 37:: display controller
- 150:: monitor
- 261:: I/V conversion circuit
- 262:: amplification circuit
- 263:: filtering circuit
- 271:: AD conversion circuit
- 272:: temperature adjustment control processor
- 273:: substance detection processor
- CLZ:: condenser lens
- CS:: camera server
- GS:: gas
- LD:: laser diode
- NVSS:: non-visible light sensor
- PD:: photodiode
- PJ:: projection unit
- PLZ:: projection light source optical unit
- SA:: light reception processor
- VSC:: visible light camera

## Claims

1. A substance detection device that holds a visible image of a detection area of a substance, the substance detection device comprising:
a projection unit that is configured to modulate a wavelength of first non-visible light and emits the first non-visible light to the detection area in a horizontal direction and a vertical direction;
a light receiving unit that is configured to receive second non-visible light obtained in a manner that the first non-visible light is transmitted through the substance and is reflected by a reflection object in a background in the detection area;
an actuator that is configured to change an emission direction of the first non-visible light in the projection unit and a light reception direction of the second non-visible light in the light receiving unit, in the detection area; and
a detection processor that is configured to generate a substance position image based on signal strength frequency characteristics of the second non-visible light, the substance position image indicating a detection result of whether or not the substance is present in the detection area,
wherein the detection processor is configured to
calculate a representative value indicating the detection result in one pixel for each of m×n pixels constituting one frame in the visible image and the substance position image, where m is an integer of 2 or more and n is an integer of 2 or more, and
display a result obtained by superimposing the calculation result on a corresponding pixel in the visible image, in a monitor.

2. The substance detection device according to claim 1, wherein the first non-visible light is a laser beam, and
a beam diameter of the laser beam is smaller than a size of one of the m×n pixels.

3. The substance detection device according to claim 1 or 2, wherein, in a case where the horizontal direction or the vertical direction is used as a main scanning direction of the first non-visible light in each of the m×n pixels,
the detection processor calculates the representative value in one pixel based on signal strength frequency characteristics of the second non-visible light at a plurality of continuous points in the one pixel.

4. The substance detection device according to any one of claims 1 to 3, wherein, in a case where the horizontal direction or the vertical direction is used as a main scanning direction of the first non-visible light in each of the m×n pixels,
the detection processor calculates a maximum value of a substance detection level depending on signal strength frequency characteristics of the second non-visible light at a plurality of continuous points in the one pixel, as the representative value in the one pixel.

5. The substance detection device according to claim 1, further comprising:
a controller that is configured to control the actuator such that an irradiation position in each frame in the vertical direction varies in horizontal scanning with the first non-visible light for each frame in the substance position image.

6. The substance detection device according to claim 5, wherein the controller is configured to control the actuator such that the irradiation position in the vertical direction varies in a unit of four frames in the substance position image.

7. The substance detection device according to claim 1, further comprising:
a controller that is configured to control the actuator such that the horizontal direction is used as a main scanning direction in an odd-numbered frame of the substance position image, and control the actuator such that the vertical direction is used as the main scanning direction in an even-numbered frame of the substance position image.

8. The substance detection device according to claim 7, wherein the controller is configured to
control the actuator such that an irradiation position in the vertical direction varies in the odd-numbered frame, and
control the actuator such that the irradiation position in the horizontal direction varies in the even-numbered frame.

9. The substance detection device according to claim 8, wherein the controller is configured to control the actuator such that the irradiation position in the vertical direction or the irradiation position in the horizontal direction varies in a unit of eight frames in the substance position image.

10. The substance detection device according to claim 1, further comprising:
a controller that is configured to set a main scanning direction of the first non-visible light to either the horizontal direction or the vertical direction based on an operation signal corresponding to a user operation,
wherein the actuator is configured to control an emission direction of the first non-visible light in accordance with the main scanning direction set by the controller.

11. The substance detection device according to claim 10, wherein the controller is configured to set the main scanning direction of the first non-visible light in a designated area based on an operation signal corresponding to an area designation operation on the substance position image displayed in the monitor.

12. The substance detection device according to claim 11, wherein the controller is configured to
set a longitudinal direction of the area to the main scanning direction of the first non-visible light, and
set a short-side direction of the area to a sub-scanning direction of the first non-visible light.

13. The substance detection device according to claim 12, wherein the detection processor is configured to
calculate the representative value indicating the detection result in one pixel for each of pixels constituting the area irradiated with the first non-visible light, and
display a result obtained by superimposing the calculation result on a corresponding pixel in the visible image, in the monitor.

14. The substance detection device according to claim 11, wherein the controller is configured to set the main scanning direction and a sub-scanning direction of the first non-visible light in accordance with a user operation on the area.

15. A substance detection method using a substance detection device that holds a visible image of a detection area of a substance, the substance detection method comprising:
a step of modulating a wavelength of first non-visible light and emitting the first non-visible light to the detection area in a horizontal direction and a vertical direction;
a step of receiving second non-visible light obtained in a manner that the first non-visible light is transmitted through the substance and is reflected by a reflection object in a background in the detection area;
a step of generating a substance position image based on signal strength frequency characteristics of the second non-visible light, the substance position image indicating a detection result of whether or not the substance is present in the detection area;
a step of changing an emission direction of the first non-visible light and a light reception direction of the second non-visible light in the detection area; and
a step of calculating a representative value indicating the detection result in one pixel for each of m× n pixels constituting one frame in the visible image and the substance position image, and displaying a result obtained by superimposing the calculation result on a corresponding pixel in the visible image, in a monitor, where m is an integer of 2 or more and n is an integer of 2 or more.
